# EUROPEAN PATENT APPLICATION

(11) **EP 4 426 009 A1**
(43) Date of publication of application: **04.09.2024**
(21) Application number: 22900373.6
(22) Date of filing: 24.11.2022
(51) Int. Cl.: H04W 36/00

(54) **HANDOVER METHOD AND APPARATUS**

(30) Priority: 30.11.2021 CN 202111446655
(71) Applicant: Huawei Technologies Co., Ltd., Shenzhen, Guangdong 518129 (CN)
(72) Inventor: HU, Xingxing, Shenzhen, Guangdong 518129 (CN); GENG, Tingting, Shenzhen, Guangdong 518129 (CN)
(74) Representative: Epping - Hermann - Fischer
(86) International application number: PCT/CN2022/134179
(87) International publication number: WO 2023/098568

(57) **Abstract**

This application discloses a handover method and an apparatus, and relates to the wireless communication field, to complete cell synchronization between a terminal and a target cell for handover. The method may be applied to handover of a terminal from a first network device to a second network device. The method includes: connecting to a first cell via the first network device; performing downlink synchronization with a downlink synchronization signal of a second cell sent by the second network device; and connecting to the second cell via the second network device. The first cell and the second cell have a same cell identifier.

## Description

This application claims priority to Patent Application No. 202111446655.8, filed with the China National Intellectual Property Administration on November 30, 2021 and entitled "HANDOVER METHOD AND APPARATUS", which is incorporated herein by reference in its entirety.

### TECHNICAL FIELD

This application relates to the wireless communication field, and in particular, to a handover method and an apparatus.

### BACKGROUND

To enhance communication quality and reliability, in addition to access network devices such as base stations, a terminal may further communicate with other network devices such as satellites or uncrewed aerial vehicles. For example, these network devices serve as base stations to provide a communication service for the terminal, or these network devices serve as relay devices to assist the terminal in communicating with a base station. In this way, a communication service may be provided for an area that is difficult for an access network device to cover, such as an ocean or a forest.

Usually, one access network device may have a plurality of cells. Usually, cell identifiers of the cells do not change in a long period of time. However, in communication between a network device such as a satellite or an uncrewed aerial vehicle and a terminal, because the network device has mobility, a physical area covered by the network device is changeable. In this case, if a cell identifier is associated with the network device, the terminal needs to frequently perform cell handover even if the terminal does not move, causing high signaling overheads of a Uu interface. To reduce frequency of cell handover performed by the terminal, the cell identifier may be associated with a geographical location. However, in this case, even if the network device in communication with the terminal changes, the terminal cannot sense the change. Consequently, the terminal device cannot perform cell synchronization.

### SUMMARY

Embodiments of this application provide a handover method and an apparatus, to complete cell synchronization between a terminal and a target cell for handover.

According to a first aspect, a handover method is provided. A communication apparatus that performs the handover method may be a terminal, or may be a module used in the terminal, for example, a chip or a chip system. The following uses an example in which an execution body is the terminal for description. The method may be applied to handover of the terminal from a first network device to a second network device. The method includes: connecting to a first cell via the first network device; performing downlink synchronization with a downlink synchronization signal of a second cell sent by the second network device; and connecting to the second cell via the second network device. The first cell and the second cell have a same cell identifier.

Based on the method provided in the first aspect, when the first network device is switched to the second network device, but a cell identifier of a cell that provides a service for the terminal does not change, the terminal may perform downlink synchronization with the downlink synchronization signal of the second cell sent by the second network device, so that the terminal can still perform normal communication after network device switching. For example, before the network device switching, the first network device may provide a service for the terminal, and the terminal may communicate with the first network device. After performing downlink synchronization with the downlink synchronization signal of the second cell sent by the second network device, the second network device may provide a service for the terminal, and the terminal may communicate with the second network device. Alternatively, before the network device switching, a first access network device may provide a service for the terminal, and the terminal may communicate with the first access network device via the first network device. After performing downlink synchronization with the downlink synchronization signal of the second cell sent by the second network device, a second access network device may provide a service for the terminal, and the terminal may communicate with the second access network device via the second network device.

In a possible implementation, the first cell is the same as the second cell.

Based on the foregoing method, after the terminal is handed over from the first network device to the second network device, a cell accessed by the terminal remains unchanged.

In a possible implementation, the method further includes: receiving first indication information, where the first indication information indicates the terminal to perform downlink synchronization, or the first indication information indicates the terminal to stop using downlink timing of the first cell.

Based on the foregoing method, the terminal may be triggered, based on the first indication information, to perform downlink synchronization, so that subsequent communication is normally performed.

In a possible implementation, the first indication information is carried in an intra-cell handover command based on a time condition.

Based on the foregoing method, the first indication information may be carried in the intra-cell handover command based on the time condition, to trigger the terminal to perform downlink synchronization.

In a possible implementation, the first indication information is carried in a dedicated radio resource control RRC message, a dedicated media access control-control element MAC-CE, or a dedicated physical channel; or the first indication information is carried in a common RRC message, a common MAC-CE, or a common physical channel.

Based on the foregoing method, the first indication information may be carried in a plurality of types of messages, thereby improving flexibility and diversity of sending the first indication information.

In a possible implementation, the method further includes: receiving configuration information, where the configuration information indicates a configuration of the downlink synchronization signal.

Based on the foregoing method, the terminal may determine a time domain location of a measurement window of the downlink synchronization signal of the second cell, so that the terminal monitors the downlink synchronization signal of the second cell at the time domain location.

In a possible implementation, the configuration information includes at least one of the following: a length of the measurement window of the downlink synchronization signal, periodicity information of the measurement window of the downlink synchronization signal, or a first offset, and at least one of the periodicity information or the first offset is for determining a starting location of the measurement window.

Based on the foregoing method, the terminal may determine the starting location of the measurement window of the downlink synchronization signal of the second cell based on at least one of the periodicity information or the first offset, and determine the time domain location of the measurement window based on the starting location and the length of the measurement window of the downlink synchronization signal of the second cell.

In a possible implementation, the method further includes: determining to switch a connected network device. The performing downlink synchronization with a downlink synchronization signal of a second cell sent by the second network device includes: when an absolute value of a difference between a first distance and a second distance is greater than or equal to a first threshold, performing downlink synchronization with the downlink synchronization signal, where the first distance is a distance between the terminal and the first network device, and the second distance is a distance between the terminal and the second network device.

Based on the foregoing method, the terminal performs downlink synchronization when determining to switch the connected network device and when the absolute value of the difference between the first distance and the second distance is greater than or equal to the first threshold. In other words, the terminal performs downlink synchronization when the first network device is increasingly far away from the terminal, the second network device is increasingly close to the terminal, and a difference between the distance between the terminal and the first network device and the distance between the terminal and the second network device is greater than or equal to the first threshold. It may be understood that, when the distance between the terminal and the first network device is the same as the distance between the terminal and the second network device or the difference between the distance between the terminal and the first network device and the distance between the terminal and the second network device is less than the first threshold, a difference between time, estimated by the terminal, when a downlink synchronization signal of the first cell sent by the first network device arrives at the terminal and time, estimated by the terminal, when the downlink synchronization signal of the second cell sent by the second network device arrives at the terminal is less than or equal to a first time difference. Therefore, to avoid performing unnecessary downlink synchronization, the terminal may still use downlink synchronization that is for communication with the first network device, as downlink synchronization that is for communication with the second network device.

In a possible implementation, the determining to switch a connected network device includes: when it is determined that remaining service time of the first network device is 0, determining to switch the connected network device.

In the foregoing method, the remaining service time may indicate remaining time in which the first network device can be connected to the terminal. Therefore, based on the foregoing method, when the first network device cannot be connected to the terminal, the terminal may determine to switch the connected network device.

In a possible implementation, the performing downlink synchronization with a downlink synchronization signal of a second cell sent by the second network device includes: searching for the downlink synchronization signal; and obtaining downlink timing based on the downlink synchronization signal.

Based on the foregoing method, the terminal may perform downlink synchronization by searching for the downlink synchronization signal of the second cell, to obtain a boundary of a system frame, a boundary of a subframe, a boundary of a slot, and a boundary of a symbol that correspond to the second cell.

In a possible implementation, the performing downlink synchronization with a downlink synchronization signal of a second cell sent by the second network device includes: obtaining a time domain location of the downlink synchronization signal based on location information of the first network device, location information of the second network device, and location information of the terminal.

Based on the foregoing method, the terminal may estimate the time domain location of the downlink synchronization signal of the second cell based on the location information of the first network device, the location information of the second network device, and the location information of the terminal. In this way, the terminal can obtain the downlink timing, that is, obtain the boundary of the system frame, the boundary of the subframe, the boundary of the slot, and the boundary of the symbol that correspond to the second cell.

In a possible implementation, the connecting to the second cell via the second network device includes: sending a random access signal to the second network device.

Based on the foregoing method, the terminal may perform a two-step random access process or a four-step random access process, to access the second cell.

In a possible implementation, the first network device is a first satellite.

Based on the foregoing method, before the terminal performs downlink synchronization with the downlink synchronization signal of the second cell sent by the second network device, the first satellite may be connected to the terminal, and may provide a communication service for an area that is difficult for an access network device to cover, such as an ocean or a forest, to enhance communication reliability.

In a possible implementation, the first satellite has a function of a first access network device, or the first satellite has a function of a distributed unit of the first access network device, where the first access network device is configured to provide a service for the terminal before the terminal performs downlink synchronization.

Based on the foregoing method, before the terminal performs downlink synchronization with the downlink synchronization signal of the second cell sent by the second network device, the first satellite may be used as the first access network device to provide a service for the terminal, or the first satellite may be used as the distributed unit of the first access network device to provide a service for the terminal. If the first satellite is used as the distributed unit of the first access network device, the first access network device has a function of a central unit, or the first access network device may be used as the central unit.

In a possible implementation, the second network device is a second satellite.

Based on the foregoing method, after the terminal performs downlink synchronization with the downlink synchronization signal of the second cell sent by the second network device, the second satellite may be connected to the terminal, and may provide a communication service for an area that is difficult for an access network device to cover, such as an ocean or a forest, to enhance communication reliability.

In a possible implementation, the second satellite has a function of the second access network device, or the second satellite has a function of a distributed unit of the second access network device, where the second access network device is configured to provide a service for the terminal after the terminal performs downlink synchronization.

Based on the foregoing method, after the terminal performs downlink synchronization with the downlink synchronization signal of the second cell sent by the second network device, the second satellite may be used as the second access network device to provide a service for the terminal, or the second satellite may be used as the distributed unit of the second access network device to provide a service for the terminal. If the second satellite is used as the distributed unit of the second access network device, the second access network device has a function of a central unit, or the second access network device may be used as the central unit.

According to a second aspect, a handover method is provided. A communication apparatus that performs the handover method may be a first access network device, or may be a module used in the first access network device, for example, a chip or a chip system. The following uses an example in which an execution body is the first access network device for description. The method includes: connecting to a terminal via a first cell, where the first cell is a cell connected to the terminal via a first network device; sending first indication information to the terminal, where the first indication information indicates the terminal to perform downlink synchronization, or the first indication information indicates the terminal to stop using downlink timing of the first cell; and connecting to the terminal via a second cell, where the second cell and the first cell have a same cell identifier, the second cell is a cell connected to the terminal via a second network device, and the first cell and the second cell are managed by the first access network device.

Based on the method provided in the second aspect, the first access network device may be connected to the terminal via the first cell, and indicate the terminal to perform downlink synchronization, or indicate the terminal to stop using downlink timing of the first cell, so that the terminal can perform downlink synchronization with a downlink synchronization signal of the second cell sent by the second network device. Subsequently, the first access network device may be connected to the terminal via the second cell, to continue to provide a service for the terminal, so that the terminal can perform normal communication.

In a possible implementation, the first cell is the same as the second cell.

Based on the foregoing method, after the terminal is handed over from the first network device to the second network device, a cell accessed by the terminal remains unchanged.

In a possible implementation, the first indication information is carried in an intra-cell handover command based on a time condition.

Based on the foregoing method, the first access network device may indicate, by using the intra-cell handover command based on the time condition, the terminal to perform downlink synchronization, or indicate the terminal to stop using the downlink timing of the first cell.

In a possible implementation, the first indication information is carried in a dedicated radio resource control RRC message, a dedicated media access control-control element MAC-CE, or a dedicated physical channel; or the first indication information is carried in a common RRC message, a common MAC-CE, or a common physical channel.

Based on the foregoing method, the first indication information may be carried in a plurality of types of messages, thereby improving flexibility and diversity of sending the first indication information.

In a possible implementation, the sending first indication information to the terminal includes: when an absolute value of a difference between a first distance and a second distance is greater than or equal to a first threshold, sending the first indication information to the terminal. The first distance is a distance between the terminal and the first network device, and the second distance is a distance between the terminal and the second network device.

Based on the foregoing method, the first access network device may send the first indication information to the terminal when the absolute value of the difference between the first distance and the second distance is greater than or equal to the first threshold, to indicate the terminal to perform downlink synchronization, or indicate the terminal to stop using the downlink timing of the first cell. In other words, when the first network device is increasingly far away from the terminal, the second network device is increasingly close to the terminal, and a difference between the distance between the terminal and the first network device and the distance between the terminal and the second network device is greater than or equal to the first threshold, the first access network device indicates the terminal to perform downlink synchronization. It may be understood that, when the distance between the terminal and the first network device is the same as the distance between the terminal and the second network device or the difference between the distance between the terminal and the first network device and the distance between the terminal and the second network device is less than the first threshold, a difference between time, estimated by the first network device, when a downlink synchronization signal of the first cell sent by the first network device arrives at the terminal and time, estimated by the first network device, when the downlink synchronization signal of the second cell sent by the second network device arrives at the terminal is less than or equal to a first time difference. Therefore, to avoid performing unnecessary downlink synchronization, the terminal may still use downlink synchronization that is for communication with the first network device, as downlink synchronization that is for communication with the second network device. The first access network device may not send the first indication information.

In a possible implementation, the method further includes: sending configuration information to the terminal, where the configuration information indicates a configuration of a downlink synchronization signal of the second cell.

Based on the foregoing method, the first access network device may send the configuration information to the terminal, to indicate, to the terminal, a time domain location of a measurement window of the downlink synchronization signal of the second cell, so that the terminal can monitor the downlink synchronization signal of the second cell at the time domain location.

In a possible implementation, the configuration information includes at least one of the following: a length of the measurement window of the downlink synchronization signal, periodicity information of the measurement window of the downlink synchronization signal, or a first offset, and at least one of the periodicity information or the first offset is for determining a starting location of the measurement window.

Based on the foregoing manner, the terminal may determine the starting location of the measurement window of the downlink synchronization signal of the second cell based on at least one of the periodicity information or the first offset, and determine the time domain location of the measurement window based on the starting location and the length of the measurement window of the downlink synchronization signal of the second cell.

In a possible implementation, the connecting to the terminal via a second cell includes: receiving a random access signal from the terminal.

Based on the foregoing method, the first access network device may perform a two-step random access process or a four-step random access process, so that the terminal accesses the second cell. In a possible implementation, the first network device is a first satellite.

Based on the foregoing method, before the terminal performs downlink synchronization with the downlink synchronization signal of the second cell sent by the second network device, the first satellite may be connected to the terminal, and may provide a communication service for an area that is difficult for an access network device to cover, such as an ocean or a forest, to enhance communication reliability.

In a possible implementation, the first satellite has a function of a first access network device, or the first satellite has a function of a distributed unit of the first access network device, where the first access network device is configured to provide a service for the terminal.

Based on the foregoing method, before the terminal performs downlink synchronization with the downlink synchronization signal of the second cell sent by the second network device, the first satellite may be used as the first access network device to provide a service for the terminal, or the first satellite may be used as the distributed unit of the first access network device to provide a service for the terminal. If the first satellite is used as the distributed unit of the first access network device, the first access network device has a function of a central unit, or the first access network device may be used as the central unit.

In a possible implementation, the second network device is a second satellite.

Based on the foregoing method, after the terminal performs downlink synchronization with the downlink synchronization signal of the second cell sent by the second network device, the second satellite may be connected to the terminal, and may provide a communication service for an area that is difficult for an access network device to cover, such as an ocean or a forest, to enhance communication reliability.

In a possible implementation, the second satellite has a function of a first access network device, or the second satellite has a function of a distributed unit of the first access network device.

Based on the foregoing method, after the terminal performs downlink synchronization with the downlink synchronization signal of the second cell sent by the second network device, the second satellite may be used as the first access network device to provide a service for the terminal, or the second satellite may be used as the distributed unit of the first access network device to provide a service for the terminal. If the second satellite is used as the distributed unit of the first access network device, the first access network device has a function of a central unit, or the first access network device may be used as the central unit.

According to a third aspect, a communication apparatus is provided, and is configured to implement the foregoing method. The communication apparatus may be the terminal in the first aspect, or an apparatus including the terminal. The communication apparatus includes a corresponding module, unit, or means (means) for implementing the foregoing method provided in the first aspect. The module, unit, or means may be implemented by hardware, software, or hardware executing corresponding software. The hardware or the software includes one or more modules or units corresponding to the foregoing function.

With reference to the third aspect, in a possible implementation, the communication apparatus may include a communication module and a processing module. The processing module may be configured to implement a processing function in the first aspect and any possible implementation of the first aspect. The processing module may be, for example, a processor. The communication module may also be referred to as a transceiver unit or a transceiver module, and is configured to implement a sending and/or receiving function in the first aspect and any possible implementation of the first aspect. The communication module may include a transceiver circuit, a transceiver machine, a transceiver, or a communication interface.

With reference to the third aspect, in a possible implementation, the communication module includes a sending module and a receiving module, which are respectively configured to implement the sending function and the receiving function in the first aspect and any possible implementation of the first aspect.

According to a fourth aspect, a communication apparatus is provided, to implement the foregoing method. The communication apparatus may be the first access network device in the second aspect, or an apparatus including the first access network device. The communication apparatus includes a corresponding module, unit, or means (means) for implementing the foregoing method provided in the second aspect. The module, unit, or means may be implemented by hardware, software, or hardware executing corresponding software. The hardware or the software includes one or more modules or units corresponding to the foregoing function.

With reference to the fourth aspect, in a possible implementation, the communication apparatus may include a communication module. The communication module may also be referred to as a transceiver unit or a transceiver module, and is configured to implement a sending and/or receiving function in the second aspect and any possible implementation of the second aspect. The communication module may include a transceiver circuit, a transceiver machine, a transceiver, or a communication interface.

With reference to the fourth aspect, in a possible implementation, the communication module includes a sending module and a receiving module, which are respectively configured to implement the sending function and the receiving function in the second aspect and any possible implementation of the second aspect.

According to a fifth aspect, a communication apparatus is provided, and includes a processor. The processor is configured to: after being coupled to a memory and reading instructions in the memory, perform, according to the instructions, the method according to the first aspect. The communication apparatus may be the terminal in the first aspect, or an apparatus including the terminal.

According to a sixth aspect, a communication apparatus is provided, and includes a processor. The processor is configured to: after being coupled to a memory and reading instructions in the memory, perform, according to the instructions, the method according to the second aspect. The communication apparatus may be the first access network device in the second aspect, or an apparatus including the first access network device.

With reference to the fifth aspect or the sixth aspect, in a possible implementation, the communication apparatus further includes the memory, and the memory is configured to store necessary program instructions and necessary data.

With reference to the fifth aspect or the sixth aspect, in a possible implementation, the communication apparatus is a chip or a chip system. Optionally, when the communication apparatus is a chip system, the communication apparatus may include a chip, or may include a chip and another discrete component.

According to a seventh aspect, a communication apparatus is provided. The communication apparatus includes a processor and an interface circuit. The interface circuit is configured to receive a computer program or instructions and transmit the computer program or the instructions to the processor. The processor is configured to execute the computer program or the instructions, to enable the communication apparatus to perform the method according to the first aspect. According to an eighth aspect, a communication apparatus is provided. The communication apparatus includes a processor and an interface circuit. The interface circuit is configured to receive a computer program or instructions and transmit the computer program or the instructions to the processor. The processor is configured to execute the computer program or the instructions, to enable the communication apparatus to perform the method according to the second aspect. With reference to the seventh aspect or the eighth aspect, in a possible implementation, the communication apparatus is a chip or a chip system. Optionally, when the communication apparatus is a chip system, the communication apparatus may include a chip, or may include a chip and another discrete component.

According to a ninth aspect, a computer-readable storage medium is provided. The computer-readable storage medium stores instructions. When the instructions are run on a computer, the computer may be enabled to perform the method according to the first aspect or the second aspect. According to a tenth aspect, a computer program product including instructions is provided. When the computer program product runs on a computer, the computer may be enabled to perform the method according to the first aspect or the second aspect.

For a technical effect achieved by any one of the possible implementations of the third aspect to the tenth aspect, refer to a technical effect achieved by any one of the first aspect, the second aspect, or different possible implementations of the first aspect or the second aspect. Details are not described herein again.

According to an eleventh aspect, a communication system is provided. The communication system includes a terminal configured to perform the method according to the first aspect and a first access network device configured to perform the method according to the second aspect.

### BRIEF DESCRIPTION OF DRAWINGS

FIG. 1A is a schematic 1 of an architecture of a communication system according to an embodiment of this application;
FIG. 1B is a schematic of a CU node and a DU node according to an embodiment of this application;
FIG. 1C is a schematic 2 of an architecture of a communication system according to an embodiment of this application;
FIG. 1D is a schematic of satellite motion according to an embodiment of this application;
FIG. 2 is a schematic of a hardware structure of a communication apparatus according to an embodiment of this application;
FIG. 3 is a schematic flowchart 1 of a handover method according to an embodiment of this application;
FIG. 4 is a schematic flowchart 2 of a handover method according to an embodiment of this application;
FIG. 5 is a schematic flowchart 3 of a handover method according to an embodiment of this application;
FIG. 6 is a schematic flowchart 4 of a handover method according to an embodiment of this application;
FIG. 7 is a schematic flowchart 5 of a handover method according to an embodiment of this application;
FIG. 8 is a schematic flowchart 6 of a handover method according to an embodiment of this application;
FIG. 9 is a schematic 1 of a structure of a communication apparatus according to an embodiment of this application; and
FIG. 10 is a schematic 2 of a structure of a communication apparatus according to an embodiment of this application.

### DESCRIPTION OF EMBODIMENTS

The following describes implementations of embodiments of this application in detail with reference to the accompanying drawings.

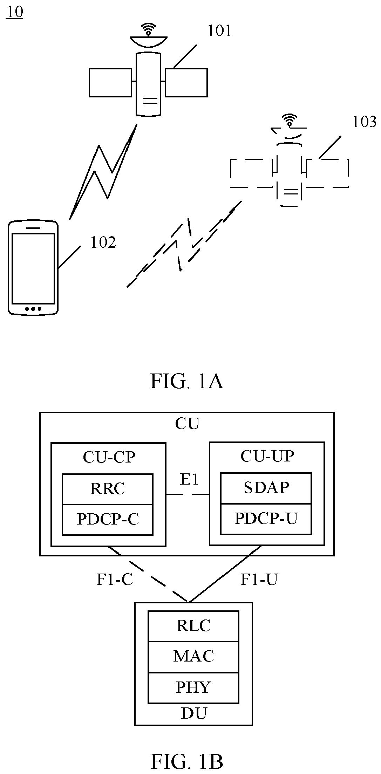

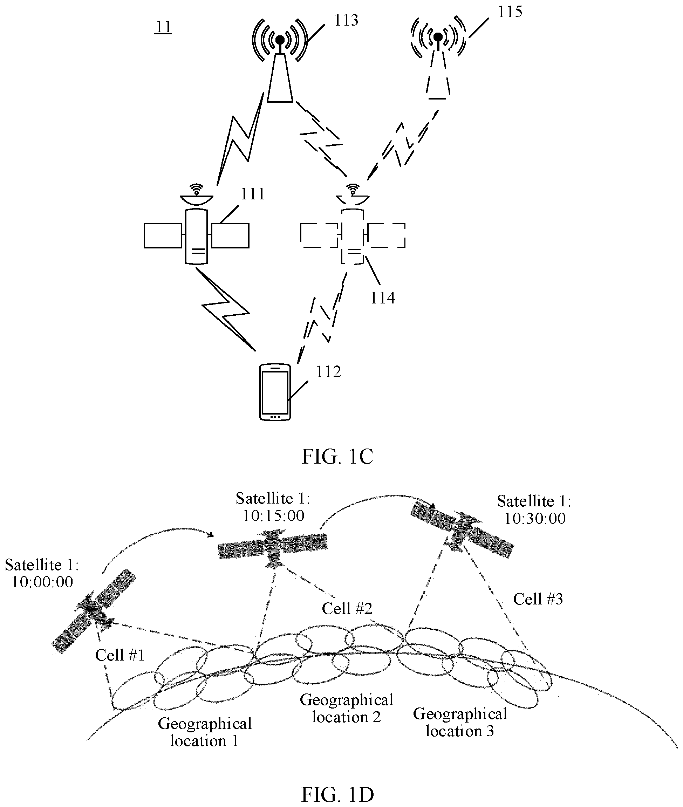

A method provided in embodiments of this application may be used in various communication systems. For example, the communication system may be a 3rd generation partnership project (3rd generation partnership project, 3GPP)-related communication system such as a long term evolution (long term evolution, LTE) system or a 5th generation (5th generation, 5G) communication system, a future evolved communication system, a system integrating a plurality of systems, or the like. This is not limited. 5G may also be referred to as new radio (new radio, NR). The following uses a communication system 10 shown in FIG. 1A and a communication system 11 shown in FIG. 1C as examples to describe the method provided in embodiments of this application.

FIG. 1A is a schematic of an architecture of the communication system 10 according to an embodiment of this application. In FIG. 1A, the communication system 10 may include a network device 101 and a terminal 102 that can communicate with the network device 101. Optionally, the communication system 10 further includes a network device 103. FIG. 1A is merely a schematic, and does not constitute a limitation on scenarios to which the technical solutions provided in this application are applicable.

A network device in FIG. 1A, for example, the network device 101 and/or the network device 103, may have a function of an access network device, and provide a wireless access service for a terminal. Specifically, each network device corresponds one service coverage area, and a terminal entering the area may communicate with the network device, to receive a wireless access service provided by the network device. Optionally, the service coverage area may include one or more cells.

In embodiments of this application, the access network device may be any device having a wireless transceiver function. For example, the access network device is a radio access network (radio access network, RAN) node (or device) that connects the terminal to a wireless network, and may also be referred to as a base station. Currently, some examples of the RAN node are: a next generation NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), or the like.

In addition, in some embodiments, the access network device may be a central unit (central unit, CU) node or a distributed unit (distributed unit, DU) node, or the access network device may be a RAN device including a CU node and a DU node.

In an example, as shown in FIG. 1B, a RAN device including a CU node and a DU node may split a protocol layer of a gNB in an NR system. Some functions of the protocol layer are centrally controlled by the CU node, and some or all of remaining functions of the protocol layer are distributed in the DU node. The CU node centrally controls the DU node. Further, the CU node may be further divided into a control plane CU (CU-CP) and a user plane CU (CU-UP). The CU-CP is responsible for a control plane function, and mainly includes radio resource control (radio resource control, RRC) and a packet data convergence layer protocol (packet data convergence protocol, PDCP) layer corresponding to a control plane, that is, a PDCP-C. The PDCP-C is mainly responsible for data encryption and decryption, integrity protection, data transmission, and the like on the control plane. The CU-UP is responsible for a user plane function, and mainly includes a service data adaptation protocol (service data adaptation protocol, SDAP) and a PDCP corresponding to a user plane, that is, a PDCP-U. The SDAP is mainly responsible for processing data of a core network and mapping a flow to a bearer. The PDCP-U is responsible for data encryption and decryption, integrity protection, header compression, sequence number maintenance, data transmission, and the like on the user plane. The CU-CP and the CU-UP are connected through an E1 interface. On behalf of the gNB, the CU-CP is connected to the core network through the NG interface, and is connected to the DU through an F1 interface-control plane, namely, F1-C. The CU-UP is connected to the DU through an F1 interface-user plane, namely, F 1-U. Certainly, in another possible implementation, the PDCP-C is also in the CU-UP. The DU node mainly includes a radio link control (radio link control, RLC) layer, a media access control (media access control, MAC) layer, and a physical (physical, PHY) layer.

In an example, the network device, such as the network device 101 and/or the network device 103, in the communication system 10 may have all functions of the access network device. In this case, the network device may be considered as an access network device, the network device may be used as an access network device, or the network device may be replaced with an access network device.

The network device, such as the network device 101 and/or the network device 103, in the communication system 10 may be any device that can move and that has a wireless transceiver function, including but not limited to a satellite or an unmanned aerial system (unmanned aerial system, UAS)

The satellite may be a regenerative satellite without an inter-satellite link (inter-satellite link, ISL) or a regenerative satellite with an ISL. The regenerative satellite may be understood as a satellite having a processing function of an access network device. The UAS includes at least one of a tethered unmanned aerial system (tethered UAS, TUA), a lighter than air (lighter than air, LTA) unmanned aerial system, a heavier than air (heavier than air UAS, HTA) unmanned aerial system, or a high-altitude communication platform station (high altitude platform station, HAPS). The UAS may be a regenerative UAS without an inter-UAS link or a regenerative UAS with an inter-UAS link. In embodiments of this application, an apparatus configured to implement a function of a network device may be a network device, or may be an apparatus that supports the network device in implementing the function, for example, a chip system. The apparatus may be installed in the network device or used in combination with the network device. In embodiments of this application, the chip system may include a chip, or may include a chip and another discrete component. In the method provided in embodiments of this application, an example in which the apparatus configured to implement the function of the network device is a network device is used to describe the method provided in embodiments of this application.

A terminal in the communication system 10, for example, the terminal 102, has a wireless transceiver function, and may be various devices that provide voice and/or data connectivity for a user, and may also be referred to as a terminal device, user equipment (user equipment, UE), a mobile station, a mobile terminal, or the like. The terminal 102 may be deployed on land, including an indoor device, an outdoor device, a handheld device, or a vehicle-mounted device; may be deployed on a water surface (for example, a ship); or may be deployed in the air (for example, an airplane, a balloon, or a satellite), and is widely used in various scenarios, for example, device-to-device (device-to-device, D2D), vehicle-to-everything (vehicle-everything, V2X) communication, machine-type communication (machine-type communication, MTC), an internet of things (internet of things, IoT), virtual reality, augmented reality, industrial control, autonomous driving, telemedicine, a smart grid, a smart furniture, a smart office, a smart wearable, smart transportation, and a smart city. The terminal 102 may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. The terminal in this application may also be a relay node. A specific technology and a specific device form that are used by the terminal are not limited in embodiments of this application. In embodiments of this application, a chip used in the foregoing device may also be referred to as a terminal.

The communication system 10 shown in FIG. 1A is merely used as an example, but is not intended to limit the technical solutions of this application. A person skilled in the art should understand that, in a specific implementation process, the communication system 10 may further include another device, and a quantity of network devices and a quantity of terminals may alternatively be determined based on a specific requirement. This is not limited.

FIG. 1C is a schematic of an architecture of the communication system 11 according to an embodiment of this application. In FIG. 1C, the communication system 11 may include a network device 111, a terminal 112 that can communicate with the network device 111, and an access network device 113 that can communicate with the network device 111. Optionally, the communication system 11 further includes a network device 114, or the communication system 11 may further include a network device 114 and an access network device 115 that can communicate with the network device 114. FIG. 1C is merely a schematic, and does not constitute a limitation on scenarios to which the technical solutions provided in this application are applicable.

The network device in FIG. 1C such as the network device 111 and/or the network device 114, may be any device that can move and that has a wireless transceiver function, including but not limited to a satellite or a UAS.

The satellite may be a transparent satellite, or the satellite may be a regenerative satellite without an ISL or a regenerative satellite with an ISL. The UAS may be a transparent UAS, or the UAS may be a regenerative UAS without an inter-UAS link or a regenerative UAS with an inter-UAS link. For descriptions of the access network device and the terminal, refer to the descriptions of the access network device and the terminal in FIG. 1A. For other descriptions of the UAS, refer to the descriptions of the UAS in FIG. 1A. Details are not described herein again.

In an example, the network device 111 may be configured to forward or transparently transmit information between the terminal 112 and the access network device 113. In other words, the network device 111 may implement a transparent payload (transparent payload). For example, the network device 111 may have at least one of the following functions: a radio frequency filtering (radio frequency filtering) function, or a frequency conversion and amplification (frequency conversion and amplification) function. In other words, the network device 111 mainly serves as a layer 1 relay (L1 relay) to regenerate a physical layer signal, and does not have another higher protocol layer.

Similarly, the network device 114 may be configured to forward or transparently transmit information between the terminal 112 and the access network device 113, the network device 114 may be configured to forward or transparently transmit information between the terminal 112 and the access network device 115, or the network device 114 may implement a transparent payload. It may be understood that, in this example, the network device 111 or the network device 114 may be a transparent satellite.

In another example, the network device 111 may have some functions of the access network device. In other words, the network device 111 may implement a regenerative payload (regenerative payload). For example, the network device 111 has a function of a DU node of the access network device, or the network device 111 may be used as the DU node. In this case, the access network device 113 may have a function of a CU node, or the access network device 113 may be used as the CU node. In this case, the network device 111 may be replaced with a DU node, and the access network device 113 may be replaced with a CU node. For another example, the network device 111 has an integrated access and backhaul (integrated access and backhaul, IAB) function, or the network device 111 and the access network device 113 implement an IAB function. In this case, the network device 111 is used as a DU node, or the network device 111 may be used as a DU node in an IAB. The access network device 113 is used as a CU node, or the access network device 113 may be used as a CU node in the IAB.

Similarly, the network device 114 may have some functions of the access network device (for example, a function of the DU node of the access network device, or a function of the DU node in the IAB function). It may be understood that, in this example, the network device 111 or the network device 114 may be a regenerative satellite without an ISL or a regenerative satellite with an ISL. It may be understood that, in this example, the network device 111 and the network device 114 are different DU nodes of a same access network device (that is, the network device 111 and the network device 114 communicate with a same CU node), or the network device 111 and the network device 114 are different DU nodes of different access network devices (that is, the network device 111 and the network device 114 communicate with different CU nodes).

The communication system 11 shown in FIG. 1C is merely used as an example, but is not intended to limit the technical solutions of this application. A person skilled in the art should understand that, in a specific implementation process, the communication system 11 may further include another device, and quantities of network devices, access network devices, and terminals may be determined based on a specific requirement. This is not limited.

It may be understood that the network device, for example, the network device 101 or the network device 111, has mobility, and therefore, a physical area covered by the network device is changeable. The physical area may include one or more cells. If a cell identifier (for example, a global cell identifier (cell global identifier, CGI) or a physical cell identifier (physical cell identifier, PCI)) of a cell is associated with a network device, for a physical area, as the network device moves, a cell identifier of a cell included in the physical area changes. Therefore, even if a terminal does not move, the terminal may perceive a change of the cell identifier of the cell. In this case, a network side (for example, a network device or an access network device) needs to trigger a cell handover procedure for the terminal. In other words, the terminal needs to frequently perform cell handover, and signaling overheads of a Uu interface are high.

To avoid frequent cell handover of a terminal, a cell identifier of a cell may be associated with a geographical location. In other words, for a geographical location, as a network device moves, a cell identifier corresponding to the geographical location remains unchanged. After a network device (for example, the network device 101) leaves the geographical location, another network device (for example, the network device 103) may provide a service for a terminal located at the geographical location. It should be understood that when the network device 103 provides a service for the terminal at the geographical location, a cell identifier of a cell at the geographical location is the same as a cell identifier of a cell at the geographical location when the network device 101 provides a service for the terminal at the geographical location.

For example, the network device 101 is a satellite 1, and the network device 103 is a satellite 2. In FIG. 1D, a cell identifier corresponding to a geographical location 1 is a cell #1, a cell identifier corresponding to a geographical location 2 is a cell #2, and a cell identifier corresponding to a geographical location 3 is a cell #3. At 10:00, the satellite 1 may cover the geographical location 1, and the satellite 1 may provide a service for a terminal located at the geographical location 1. In this case, a cell identifier corresponding to the satellite 1 is the cell #1. At 10:15, a geographical location covered by the satellite 1 changes to the geographical location 2, the satellite 1 may provide a service for a terminal located at the geographical location 2, and a cell identifier corresponding to the satellite 1 is the cell #2. If the satellite 2 covers the geographical location 1 in this case, a satellite that provides a service for the terminal at the geographical location 1 is switched from the satellite 1 to the satellite 2, and a cell identifier corresponding to the satellite 2 is the cell #1. At 10:30, a geographical location covered by the satellite 1 changes to the geographical location 3, the satellite 1 may provide a service for a terminal located at the geographical location 3, and a cell identifier corresponding to the satellite 1 is the cell #3. If the satellite 2 covers the geographical location 2 in this case, a satellite that provides a service for the terminal at the geographical location 2 is switched from the satellite 1 to the satellite 2, and a cell identifier corresponding to the satellite 2 is the cell #2.

It can be learned from the foregoing descriptions that, when a network device communicating with a terminal changes, a cell identifier of a cell that provides a service for the terminal does not change, or a cell identifier sensed by the terminal does not change. For example, in the foregoing example, at 10: 15, the satellite communicating with the terminal at the geographical location 1 changes from the satellite 1 to the satellite 2, but a cell identifier sensed by the terminal is still the cell #1. In this case, a network side (for example, a network device or an access network device) does not trigger a cell handover procedure for the terminal, but a network device or an access network device that actually communicates with the terminal has changed. In this case, how the terminal performs cell synchronization is a problem that needs to be urgently resolved.

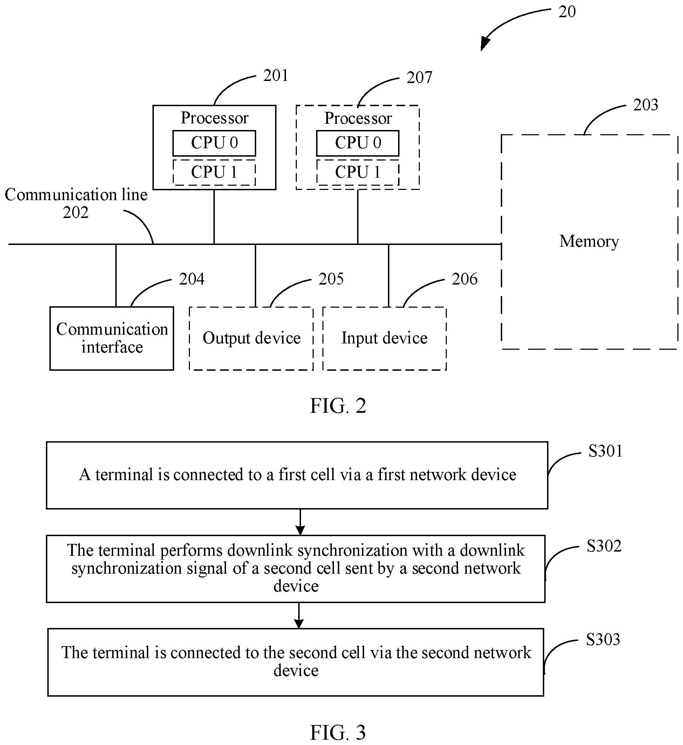

To resolve this problem, embodiments of this application provide a handover method. The method may be applied to handover of a terminal from a first network device to a second network device. The method includes: connecting to a first cell via the first network device; performing downlink synchronization with a downlink synchronization signal of a second cell sent by the second network device; and connecting to the second cell via the second network device. The first cell and the second cell have a same cell identifier. A specific process of the method is described in the following embodiment shown in FIG. 3. It should be noted that, in embodiments of this application, that the first cell and the second cell have a same cell identifier may include that PCIs are the same but CGIs are different, or both PCIs and CGIs are the same.

It may be understood that embodiments of this application may be applied to a scenario in which a cell identifier is associated with a geographical location. In this scenario, a cell may also be referred to as a quasi-earth fixed cell (quasi-earth fixed cell).

Optionally, each network element or device (for example, a network device, a terminal, or an access network device) in FIG. 1A or FIG. 1C in embodiments of this application may also be referred to as a communication apparatus, and may be a general-purpose device or a dedicated device. This is not specifically limited in embodiments of this application.

Optionally, a related function of the network element or device (for example, the network device, the terminal, or the access network device) in FIG. 1A or FIG. 1C in embodiments of this application may be implemented by one device, may be implemented jointly by a plurality of devices, or may be implemented by one or more functional modules in one device. This is not specifically limited in embodiments of this application. It may be understood that the foregoing function may be a network element in a hardware device, or may be a software function running on dedicated hardware, a combination of hardware and software, or a virtualization function instantiated on a platform (for example, a cloud platform).

During specific implementation, each network element or device (for example, a network device, a terminal, or an access network device) in FIG. 1A or FIG. 1C in embodiments of this application may use a composition structure shown in FIG. 2, or include components shown in FIG. 2. FIG. 2 is a schematic of a hardware structure of a communication apparatus applicable to an embodiment of this application. The communication apparatus 20 includes at least one processor 201 and at least one communication interface 204, and is configured to implement the method provided in embodiments of this application. The communication apparatus 20 may further include a communication line 202 and a memory 203.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 202 may include a channel such as a bus for transmitting information between the foregoing components.

The communication interface 204 is configured to communicate with another device or a communication network. The communication interface 204 may be any apparatus such as a transceiver, for example, may be an Ethernet interface, a radio access network (radio access network, RAN) interface, a wireless local area network (wireless local area network, WLAN) interface, a transceiver, a pin, a bus, or a transceiver circuit.

The memory 203 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction structure or a data structure and that is accessible to a computer, but is not limited thereto. The memory may exist independently, and is coupled to the processor 201 through the communication line 202. The memory 203 may alternatively be integrated with the processor 201. The memory provided in embodiments of this application may be usually non-volatile.

The memory 203 is configured to store computer-executable instructions for executing the solutions provided in embodiments of this application, and the processor 201 controls execution. The processor 201 is configured to execute the computer-executable instructions stored in the memory 203, to implement the method provided in embodiments of this application. Alternatively, optionally, in embodiments of this application, the processor 201 may perform processing-related functions in a method provided in the following embodiments of this application, and the communication interface 204 is responsible for communication with another device or a communication network. This is not specifically limited in embodiments of this application. Optionally, the computer-executable instructions in this embodiment of this application may also be referred to as application program code. This is not specifically limited in this embodiment of this application.

The coupling in this embodiment of this application may be an indirect coupling or a communication connection between apparatuses, units, or modules in an electrical form, a mechanical form, or another form, and is used for information exchange between the apparatuses, the units, or the modules.

In an embodiment, the processor 201 may include one or more CPUs, for example, a CPU 0 and a CPU 1 in FIG. 2.

In an embodiment, the communication apparatus 20 may include a plurality of processors, for example, the processor 201 and a processor 207 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 20 may further include an output device 205 and/or an input device 206. The output device 205 is coupled to the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 is coupled to the processor 201, and may receive an input of a user in a plurality of manners. For example, the input device 206 may be a mouse, a keyboard, a touchscreen device, or a sensor device.

It may be understood that the composition structure shown in FIG. 2 does not constitute a limitation on the communication apparatus. In addition to the components shown in FIG. 2, the communication apparatus may include more or fewer components than those shown in the figure, some components may be combined, or different component arrangements may be used.

The following describes the handover method provided in embodiments of this application with reference to the accompanying drawings. Network elements in the following embodiments may have components shown in FIG. 2. Details are not described again.

It should be noted that names of messages between network elements, names of parameters in the messages, or the like in the following embodiments of this application are merely examples, and there may be other names in a specific implementation. This is not specifically limited in embodiments of this application.

It should be noted that, in embodiments of this application, "/" may represent an "or" relationship between associated objects. For example, A/B may represent A or B. "And/or" may be used to describe a case in which three relationships exist between associated objects. For example, A and/or B may represent the following three cases: Only A exists, both A and B exist, and only B exists. A and B may be singular or plural. In addition, a representation similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the representation, a meaning of the representation may be obtained according to the foregoing rules.

To facilitate description of the technical solutions in embodiments of this application, in embodiments of this application, objects may be distinguished by using "first", "second", "third", "A", "B", "C", and "D". Technical features described by using "first", "second", "third", "A", "B", "C", and "D" do not indicate a sequence or an order of size, and do not constitute a limitation on a quantity of described objects. In addition, the words such as "first" and "second" do not limit the described objects to be definitely different.

In embodiments of this application, the word such as "example" or "for example" is used to represent an example, an evidence, or a description. Any embodiment or design solution described as "example" or "for example" should not be explained as being more preferred or having more advantages than another embodiment or design solution. A word such as "example" or "for example" is used to present a related concept in a specific manner for ease of understanding.

It may be understood that a same step or a step or a technical feature having a same function in embodiments of this application may be mutually referenced in different embodiments.

It may be understood that in embodiments of this application, the terminal, and/or the network device, and/or the access network device may perform some or all of steps in embodiments of this application. These steps are merely examples. In embodiments of this application, other steps or variations of various steps may be further performed. In addition, the steps may be performed in a sequence different from a sequence presented in embodiments of this application, and not all the steps in embodiments of this application need to be performed.

FIG. 3 shows a handover method according to an embodiment of this application. The method may be applied to handover of a terminal from a first network device to a second network device. The handover method includes S301 to S303.

S301: The terminal is connected to a first cell via the first network device.

It may be understood that the handover method shown in FIG. 3 may be applied to the communication system 10 shown in FIG. 1A, or applied to the communication system 11 shown in FIG. 1C. For a case in which the method is applied to the communication system 10 shown in FIG. 1A, refer to the following descriptions of a manner 1. For a case in which the method is applied to the communication system 11 shown in FIG. 1C, refer to the following descriptions of a manner 2. The following provides detailed descriptions.

### Manner 1:

In the manner 1, the terminal may be a terminal in the communication system 10. For example, the terminal is the terminal 102 shown in FIG. 1A. The first network device may be a network device in the communication system 10. For example, the first network device may be the network device 101 shown in FIG. 1A.

In an example, the first network device is a first satellite. Optionally, the first satellite has a function of a first access network device. In other words, the first satellite may be considered as the first access network device, the first satellite may be used as the first access network device, or the first satellite may be replaced with the first access network device. In this case, a downlink synchronization signal of the first cell sent by the first network device is generated and sent by the first network device. For descriptions of the first access network device, refer to the descriptions of the access network device in FIG. 1A.

It may be understood that, that the terminal is connected to the first cell via the first network device may be understood as that the first network device provides a service for the terminal to connect to the first cell, or the first network device is configured to provide a service for the terminal before the terminal performs downlink synchronization with a downlink synchronization signal of a second cell sent by the second network device. The first cell is managed by the first network device. Correspondingly, the first network device is connected to the terminal via the first cell.

### Manner 2:

In the manner 2, the terminal may be a terminal in the communication system 11. For example, the terminal is the terminal 112 shown in FIG. 1C. The first network device may be a network device in the communication system 11. For example, the first network device may be the network device 111 shown in FIG. 1C.

In an example, the first network device is a first satellite. Optionally, the first satellite or the first network device may be configured to forward or transparently transmit information between a first access network device and the terminal, or the first satellite or the first network device may have some functions of an access network device (for example, a function of a DU node of the access network device, or a function of a DU node in an IAB function). The first access network device may be an access network device in the communication system 11. For example, the first access network device is the access network device 113 shown in FIG. 1C. The first access network device may have a function of a CU node.

It may be understood that, for the manner 2, if the first satellite or the first network device is configured to forward or transparently transmit information between the first access network device and the terminal, a downlink synchronization signal of the first cell sent by the first network device (or the first satellite) is generated by the first access network device and sent to the first network device (or the first satellite). After receiving the downlink synchronization signal, the first network device (or the first satellite) sends the downlink synchronization signal to the terminal. If the first satellite or the first network device has some functions of the access network device, the downlink synchronization signal of the first cell sent by the first network device (or the first satellite) is generated by the first network device and sent to the terminal.

It may be understood that, for the manner 2, that the terminal is connected to the first cell via the first network device may be understood as that the first access network device provides, via the first network device, a service for the terminal to connect to the first cell, or the first access network device is configured to provide a service for the terminal before the terminal performs downlink synchronization with a downlink synchronization signal of a second cell sent by the second network device.

When the first network device is configured to forward or transparently transmit information between the first access network device and the terminal (that is, the first network device transparently transmits a payload), the first cell is managed by the first access network device. When the first network device has some functions of the access network device, the first cell may be managed by the first access network device, or may be managed by the first network device. The first cell is a cell to which the terminal is connected via the first network device. Correspondingly, the first access network device is connected to the terminal via the first cell. It may be understood that, in the manner 2, information sent by the terminal may be sent to the first access network device via the first network device. Similarly, information sent by the first access network device may be sent to the terminal via the first network device. It may be understood that, when the first network device has some functions of the access network device, the first network device may alternatively directly send some information to the terminal.

Optionally, for the manner 1 and the manner 2, the terminal is in a connected state, for example, a radio resource control connected (radio resource control connected, RRC-connected) state. S302: The terminal performs downlink synchronization with the downlink synchronization signal of the second cell sent by the second network device.

For the manner 1:
The second network device may be a network device in the communication system 10. For example, the second network device is the network device 103 shown in FIG. 1A. The second network device is configured to provide a service for the terminal after the terminal performs downlink synchronization (that is, after S302). The second cell is managed by the second network device, and the second cell and the first cell have a same cell identifier.

In an example, the second network device is a second satellite. The second satellite is different from the first satellite. Optionally, the second satellite has a function of a second access network device. In other words, the second satellite may be considered as the second access network device, the second satellite may be used as the second access network device, or the second satellite may be replaced with the second access network device. The second access network device is different from the first access network device. For descriptions of the second access network device, refer to the descriptions of the access network device in FIG. 1A.

In a possible implementation, the downlink synchronization signal of the second cell sent by the second network device is generated and sent by the second network device.

Optionally, before S302, the first network device sends configuration information to the terminal. Correspondingly, the terminal receives the configuration information from the first network device. The configuration information may indicate a configuration of the downlink synchronization signal of the second cell. In this way, the terminal may determine a time domain location of a measurement window of the downlink synchronization signal of the second cell. The measurement window is a period of time, and is for detecting the downlink synchronization signal.

In an example, the configuration information may include at least one of the following: a length of the measurement window of the downlink synchronization signal of the second cell, periodicity information of the measurement window of the downlink synchronization signal of the second cell, or a first offset. The periodicity information of the measurement window may indicate a periodicity of the measurement window. At least one of the periodicity information of the measurement window or the first offset may be for determining a time-domain starting location of the measurement window. In this way, the time domain location of the measurement window may be determined based on the time-domain starting location of the measurement window and the length of the measurement window.

For example, the terminal monitors the downlink synchronization signal of the second cell in the following manner. The terminal monitors the downlink synchronization signal of the second cell in a system frame and a subframe that satisfy the following condition: A system frame number corresponding to the measurement window satisfies a formula: *SFN modT = (FLOOR (Offset* / 10)).

*SFN* is the system frame number corresponding to the measurement window, mod is a modulo operation symbol, *FLOOR* is a round-down function, and *Offset* is the first offset. *T* satisfies a formula: *T* = *CEIL (Periodicity* / 10). *CEIL* is a round-up function, and *Periodicity* is a periodicity of the measurement window. If the periodicity of the measurement window is greater than five subframes, a subframe number corresponding to the measurement window satisfies a formula: *subframe* = *Offset* mod 10*.* If the periodicity of the measurement window is less than or equal to five subframes, a subframe number corresponding to the measurement window satisfies a formula: *subframe* = *Offset* or *subframe* = *Offset* + 5 .

For the manner 2:
The second network device may be a network device in the communication system 11. For example, the second network device is the network device 114 shown in FIG. 1C.

In an example, the second network device is a second satellite. The second satellite is different from the first satellite. Optionally, the second satellite or the second network device may be configured to forward or transparently transmit information between a second access network device and the terminal, or the second satellite or the second network device may have some functions of the second access network device (for example, a function of a DU node of the access network device, or a function of a DU node of an IAB function).

The second access network device may be an access network device in the communication system 11. For example, the second access network device is the access network device 113 or the access network device 115 shown in FIG. 1C. When the second network device is configured to forward or transparently transmit information between the second access network device and the terminal (that is, the second network device transparently transmits a payload), the second cell is managed by the second access network device. When the second network device has some functions of the access network device, the second cell may be managed by the second access network device, or may be managed by the second network device. The second cell is a cell to which the terminal is connected via the second network device. The second cell and the first cell have a same cell identifier.

In a possible implementation, for the manner 2, the second access network device is the same as or different from the first access network device. If the second access network device is the same as the first access network device, it indicates that the terminal may communicate with the first access network device via the first network device before the terminal performs downlink synchronization (that is, before S302), and the terminal may communicate with the first access network device via the second network device after the terminal performs downlink synchronization (that is, after S302). In this case, the first cell and the second cell are the same, and the first cell and the second cell are managed by the first access network device. Alternatively, the first cell and the second cell may be different, the first cell is managed by the first network device, and the second cell is managed by the second network device. If the second access network device is different from the first access network device, it indicates that the terminal may communicate with the first access network device via the first network device before the terminal performs downlink synchronization (that is, before S302), and the terminal may communicate with the second access network device via the second network device after the terminal performs downlink synchronization (that is, after S302). In this case, the first cell is the same as or different from the second cell, the first cell is managed by the first access network device, and the second cell is managed by the second access network device. Alternatively, the first cell is managed by the first network device, and the second cell is managed by the second network device.

In a possible implementation, for the manner 2, if the second network device (for example, the second satellite) is configured to forward or transparently transmit information between the second access network device and the terminal, the downlink synchronization signal of the second cell sent by the second network device is generated by the second access network device and sent to the second network device. After receiving the downlink synchronization signal, the second network device sends the downlink synchronization signal to the terminal. If the second satellite or the second network device has some functions of the second access network device, the downlink synchronization signal of the second cell sent by the second network device is generated by the second network device and sent to the terminal.

Optionally, for the manner 2, before S302, the first access network device sends configuration information to the terminal. Correspondingly, the terminal receives the configuration information from the first access network device. For example, the first access network device sends the configuration information to the first network device, and the first network device sends the configuration information to the terminal after receiving the configuration information. For descriptions of the configuration information, refer to the descriptions in the foregoing manner 1. In this way, the terminal may determine a time domain location of a measurement window of the downlink synchronization signal of the second cell.

For the foregoing manner 1 and manner 2, the first cell and the second cell are the same or different. In this embodiment of this application, that the two cells are the same may be understood as: Configurations of the two cells are the same. For example, physical cell identifiers of the two cells are the same, and radio resource configurations configured for the terminal by the two cells are the same. The radio resource configuration may include at least one of the following configurations: a related configuration of an RRC layer, a related configuration of an SDAP layer, a related configuration of a PDCP layer, a related configuration of an RLC layer, a related configuration of a MAC layer, a related configuration of a PHY layer, or the like. Therefore, that the first cell and the second cell are the same may be understood as that the first cell and the second cell are not a same cell, but a configuration of the first cell is the same as a configuration of the second cell, or the first cell and the second cell are a same cell.

That the first cell is different from the second cell may be understood as that a configuration of the first cell is different from a configuration of the second cell. For example, a radio resource configuration configured by the first cell for the terminal is different from a radio resource configuration configured by the second cell for the terminal, but a cell identifier of the first cell is the same as a cell identifier of the second cell. In this embodiment of this application, the first cell may also be referred to as a source serving cell or a source cell, and the second cell may be referred to as a target serving cell or a target cell.

Optionally, for the foregoing manner 1 and manner 2, the following two possible implementations are used by the terminal to perform downlink synchronization with the downlink synchronization signal of the second cell sent by the second network device. In this embodiment of this application, downlink synchronization may also be referred to as cell search.

In a possible implementation, the terminal searches for the downlink synchronization signal of the second cell, and obtains downlink timing based on the downlink synchronization signal. It may be understood that, because the terminal switches a connected network device, and downlink timing of the downlink synchronization signals of the two cells may be different, the terminal needs to research for the downlink synchronization signal of the second cell.

In an example, the terminal determines the time domain location of the measurement window of the downlink synchronization signal of the second cell based on the configuration information, searches for the downlink synchronization signal of the second cell at the time domain location, and obtains the downlink timing based on the downlink synchronization signal, including: obtaining a boundary of a system frame, a boundary of a subframe, a boundary of a slot, and a boundary of a symbol that correspond to the second cell.

It may be understood that, for the manner 1, the boundary of the system frame, the boundary of the subframe, the boundary of the slot, and the boundary of the symbol that correspond to the second cell may be understood as a boundary of a system frame, a boundary of a subframe, a boundary of a slot, and a boundary of a symbol that are of the second cell and that are in a network provided by the second network device. For the manner 2, the boundary of the system frame, the boundary of the subframe, the boundary of the slot, and the boundary of the symbol that correspond to the second cell may be understood as a boundary of a system frame, a boundary of a subframe, a boundary of a slot, and a boundary of a symbol that are of the second cell and that are in a network provided by the second network device and the second access network device.

It may be understood that, in this embodiment of this application, the terminal may calculate a maximum delay of a handover interruption based on that the second cell is an unknown cell.

The maximum delay of the handover interruption may be a maximum delay of handover of the terminal from one access network device to another access network device, or a maximum delay of handover of the terminal from one network device to another network device. The maximum delay of the handover interruption includes time required by the terminal to search for a target cell (that is, the second cell). The target cell may be a known cell or an unknown cell; and when the target cell is a known cell or an unknown cell, time required by the terminal to search for the target cell is different. For example, when the target cell is a known cell, time required by the terminal to search for the target cell is 0 ms. When the target cell is an unknown cell, time required by the terminal to search for the target cell is related to signal quality of the target cell and/or whether the target cell and a source cell (that is, the first cell) are intra-frequency cells or inter-frequency cells. However, in this embodiment of this application, even if the source cell and the target cell have a same cell identifier, the source cell and the target cell are not necessarily a same cell. Therefore, in this embodiment of this application, the time required by the terminal to search for the target cell is not set to 0 ms. That is, the terminal does not calculate the maximum delay of the handover interruption based on that the second cell is a known cell, but calculates the maximum delay of the handover interruption based on that the second cell is an unknown cell. Whether the target cell is a known cell or an unknown cell may be determined according to some preset conditions. For example, for handover from a source cell in a frequency domain range of 1 (frequency range 1, FR1) frequency band to a target cell in the FR1 frequency band and handover from a source cell in a frequency domain range of 2 (frequency range 2, FR2) frequency band to a target cell in the FR1 frequency band, if the target cell meets a corresponding cell identification requirement within 5 seconds before the handover, the target cell is considered as a known cell; otherwise, the target cell is considered as an unknown cell.

In another possible implementation, for a case in which the first network device and the second network device have some functions of the access network device in the manner 1 or the manner 2, the terminal obtains a time domain location of the downlink synchronization signal of the second cell based on location information of the first network device, location information of the second network device, and location information of the terminal. In this way, the terminal can obtain the downlink timing.

In an example, for a case in which the first network device and the second network device have some functions of the access network device in the manner 1 or the manner 2, if a start moment of a downlink subframe 0, corresponding to the terminal, in the first cell is 11, a distance between the terminal and the first network device is D1 (which may be obtained based on the location information of the first network device and the location information of the terminal), and a distance between the terminal and the second network device is D2 (which may be obtained based on the location information of the second network device and the location information of the terminal), a start moment of the downlink subframe 0, corresponding to the terminal, in the second cell is (t1-(D1-D2)/c1).

c1 is the speed of light, and the start moment of the downlink subframe 0 of the second cell may be understood as a start moment at which the second network device sends the downlink synchronization signal of the second cell.

In another possible implementation, for another scenario (for example, the first network device is configured to forward or transparently transmit information between the first access network device and the terminal, and the second network device is configured to forward or transparently transmit information between the second access network device and the terminal) in the manner 2, the terminal obtains the time domain location of the downlink synchronization signal of the second cell based on a delay difference between a propagation delay between the terminal and the first access network device and a propagation delay between the terminal and the second access network device. In this way, the terminal can obtain the downlink timing.

In an example, for another scenario in the manner 2, if a start moment of a downlink subframe 0, corresponding to the terminal, in the first cell is 11, a propagation delay between the first network device and the first access network device is t2 (t2 may be notified by the first access network device to the terminal), and a propagation delay between the second network device and the second access network device is t3 (t3 may be notified by the second access network device to the terminal), the terminal calculates a distance D3 between the terminal and the first network device based on location information of the terminal and location information of the first network device, and calculates a distance D4 between the terminal and the second network device based on the location information of the terminal and location information of the second network device. A start moment of a downlink subframe 0, corresponding to the terminal, in the second cell is (t1-(D3+t2*c1-D4-t3*c1)/c1). The start moment of the downlink subframe 0 of the second cell may be understood as a start moment at which the second network device sends the downlink synchronization signal of the second cell.

In another example, for another scenario in the manner 2, if a start moment of a downlink subframe 0, corresponding to the terminal, in the first cell is 11, the terminal obtains a propagation delay t2 between the terminal and the first network device based on location information of the terminal and location information of the first network device, and obtains a delay value t4 based on t2 and a delay value t3 (t3 may include a propagation delay between the first access network device and the first network device) broadcast by the first access network device. For example, t4=t2+t3. Similarly, the terminal obtains a propagation delay t5 between the terminal and the second network device based on the location information of the terminal and the location information of the second network device, and obtains a delay value t7 based on t5 and a delay value t6 (t6 may include a propagation delay between the second access network device and the second network device) broadcast by the second access network device. For example, t7=t5+t6. Subsequently, the terminal may determine that the start moment of the downlink subframe 0, corresponding to the terminal, in the second cell is (t1-(t4-t7)). The start moment of the downlink subframe 0 of the second cell may be understood as a start moment at which the second network device sends the downlink synchronization signal of the second cell.

Optionally, for the foregoing manner 1 and manner 2, the following two possible implementations are for triggering the terminal to perform downlink synchronization.

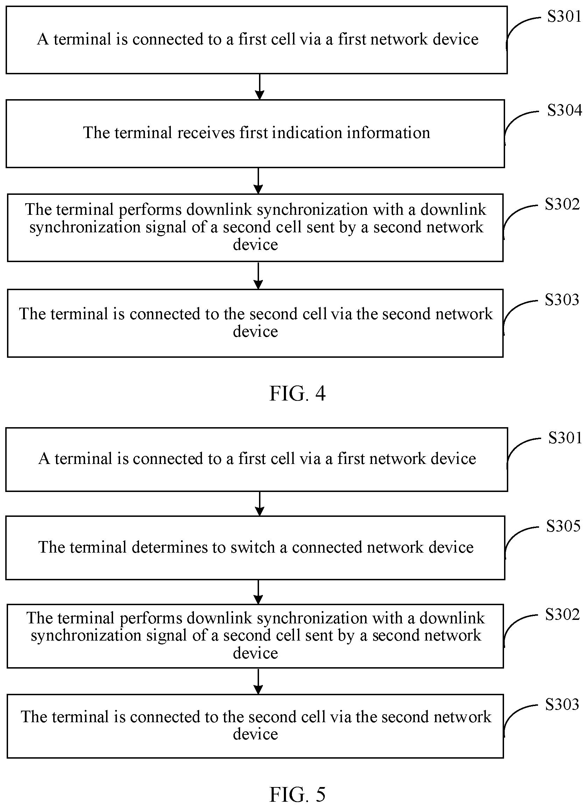

In a possible implementation, the terminal receives first indication information, and performs, based on the first indication information, downlink synchronization with the downlink synchronization signal of the second cell sent by the second network device. This process is described in the following method shown in FIG. 4.

In another possible implementation, the terminal determines to switch a connected network device. In this case, the terminal performs downlink synchronization with the downlink synchronization signal of the second cell sent by the second network device. This process is described in the following method shown in FIG. 5.

S303: The terminal is connected to the second cell via the second network device.

It may be understood that, if the first cell and the second cell are a same cell, after S302, the terminal may change a network device for connecting to the first cell from the first network device to the second network device.

In an example, the communication system 11 shown in FIG. 1C is used as an example. If the first network device is the network device 111, the terminal is the terminal 112, the first access network device and the second access network device are the same and both are the access network device 113, and the second network device is the network device 114, the terminal 112 is first connected to the first cell of the access network device 113 via the network device 111, and is connected to the first cell of the access network device 113 via the network device 114 after performing downlink synchronization with the downlink synchronization signal of the second cell sent by the network device 114.

It may be understood that, if the first cell and the second cell are not a same cell, but the configuration of the first cell is the same as the configuration of the second cell, or the first cell and the second cell are different cells, after S302, the terminal is disconnected from the first cell, and is connected to the second cell via the second network device.

In an example, the communication system 10 shown in FIG. 1A is used as an example. If the first network device is the network device 101, the terminal is the terminal 102, and the second network device is the network device 103, the terminal 102 is first connected to the first cell of the network device 101, and is connected to the second cell of the network device 102 after performing downlink synchronization with the downlink synchronization signal of the second cell sent by the network device 102. The first cell is different from the second cell, or the first cell and the second cell are not a same cell, but the configuration of the first cell is the same as the configuration of the second cell.

In another example, the communication system 11 shown in FIG. 1C is used as an example. If the first network device is the network device 111, the terminal is the terminal 112, the first access network device and the second access network device are the same and both are the access network device 113, and the second network device is the network device 114, the terminal 112 is first connected to the first cell of the access network device 113 via the network device 111, and is connected to the second cell of the access network device 113 via the network device 114 after performing downlink synchronization with the downlink synchronization signal of the second cell sent by the network device 114. The first cell and the second cell are not a same cell, but the configuration of the first cell is the same as the configuration of the second cell.

In another example, the communication system 11 shown in FIG. 1C is used as an example. If the first network device is the network device 111, the terminal is the terminal 112, the first access network device is the access network device 113, the second network device is the network device 114, and the second access network device is the access network device 115, the terminal 112 is first connected to the first cell of the access network device 113 via the network device 111, and is connected to the second cell of the access network device 115 via the network device 114 after performing downlink synchronization with the downlink synchronization signal of the second cell sent by the network device 114. The first cell is different from the second cell, or the first cell and the second cell are not a same cell, but the configuration of the first cell is the same as the configuration of the second cell.

In a possible implementation, that the terminal is connected to the second cell via the second network device includes: The terminal sends a random access signal to the second network device, to perform a two-step random access process or a four-step random access process.

It may be understood that, for a case in which the second network device has some functions of the access network device in the manner 1 or the manner 2, after receiving the random access signal, the second network device may perform a subsequent procedure in two-step random access or four-step random access. For a case in which the second network device is configured to forward or transparently transmit information between the second access network device and the terminal in the manner 2, after receiving the random access signal, the second network device sends the random access signal to the second access network device. After receiving the random access signal, the second access network device may perform a subsequent procedure in two-step random access or four-step random access.

Optionally, if the first indication information is not carried in an intra-cell handover command, and an uplink time alignment timer of the terminal expires, it indicates that the terminal does not need to send uplink data. Therefore, the terminal may not send the random access signal to the second network device. Subsequently, if there is another requirement, for example, when there is an uplink service, the terminal sends the random access signal to the second network device.

Optionally, if the first indication information is not carried in an intra-cell handover command, and an uplink time alignment timer of the terminal does not expire, it indicates that the terminal may need to send uplink data. Therefore, the terminal may send the random access signal to the second network device.

It may be understood that in a process in which the terminal initiates random access (that is, after the terminal sends the random access signal and before the terminal accesses the second network device or the second access network device), if the terminal receives an uplink time adjustment command, the terminal may restart the uplink time adjustment timer.

In a possible implementation, that the terminal is connected to the second cell via the second network device includes: The terminal sends uplink data (which may be an RRC message, a MAC-CE, an RLC control protocol data unit (control protocol data unit, control PDU), a PDCP control protocol data unit control PDU, or application layer data) to the second network device, that is, the terminal may not need to send the random access signal to the second cell.

In an implementation, the first network device or the first access network device may allocate some uplink resources (for example, allocate an uplink resource to the terminal by using a dedicated RRC message or a broadcast message) to the terminal in advance, and the terminal selects at least one resource from these uplink resources to transmit uplink data.

In another implementation, the first network device or the first access network device sends a downlink control physical channel to the terminal, where the downlink control physical channel carries an uplink resource for connecting the terminal to the second cell. Further, optionally, the downlink control physical channel includes indication information #1, to indicate the terminal to use, when connecting to the second cell, the uplink resource carried in the downlink control physical channel.

Optionally, when the terminal sends uplink data to the second cell via the second network device, for the manner 1, the terminal first determines, based on the propagation delay between the terminal and the second network device or/and the propagation delay between the terminal and the first network device, a timing advance for transmitting the uplink data between the terminal and the second network device.

Optionally, when the terminal sends uplink data to the second cell via the second network device, for the manner 2, the terminal first determines, based on the distance between the terminal and the second network device and a distance between the second network device and a second time synchronization reference point, a timing advance for transmitting the uplink data between the terminal and the second network device. Alternatively, for the manner 2, the terminal first determines, based on the distance between the terminal and the second network device, a distance between the second network device and a second time synchronization reference point, the distance between the terminal and the first network device, and a distance between the first network device and a first time synchronization reference point, a timing advance for transmitting the uplink data between the terminal and the second network device.

The second time synchronization reference point is a point between the second network device and the second access network device, and may also be referred to as a point at which there is an offset #2 between downlink frame timing and uplink frame timing (the second uplink synchronization reference point is the point where DL and UL are frame aligned with an offset #2). The offset #2 is a value broadcast by the second cell. The first time synchronization reference point is a point between the first network device and the first access network device, and may also be referred to as a point at which there is an offset #1 between downlink frame timing and uplink frame timing (the first uplink synchronization reference point is the point where DL and UL are frame aligned with an offset #1). The offset #1 is a value broadcast by the first cell.

Based on the method shown in FIG. 3, when the first network device is switched to the second network device, but a cell identifier of a cell that provides a service for the terminal does not change, the terminal may perform downlink synchronization with the downlink synchronization signal of the second cell sent by the second network device, so that the terminal can still perform normal communication after network device switching. For example, for the manner 1, before S302, the first network device may provide a service for the terminal, and the terminal may communicate with the first network device. After S302, the second network device may provide a service for the terminal, and the terminal may communicate with the second network device. For the manner 2, before S302, the first access network device may provide a service for the terminal, and the terminal may communicate with the first access network device via the first network device.

After S302, the second access network device may provide a service for the terminal, and the terminal may communicate with the second access network device via the second network device. Optionally, in a possible implementation of the method shown in FIG. 3, the first indication information may be for triggering the terminal to perform downlink synchronization. Specifically, as shown in FIG. 4, the method shown in FIG. 3 may further include S304.

S304: The terminal receives the first indication information.

The first indication information may indicate the terminal to perform downlink synchronization. For example, the first indication information may indicate the terminal to perform downlink synchronization. Alternatively, the first indication information may indicate the terminal to perform downlink synchronization with the downlink synchronization signal of the second cell sent by the second network device. Alternatively, the first indication information may indicate the terminal to stop using the downlink timing of the first cell.

It may be understood that, for a case in which the first network device has some functions of the access network device in the manner 1 or the manner 2, the first network device sends the first indication information to the terminal, and correspondingly, the terminal receives the first indication information from the first network device.

In a possible implementation, when an absolute value of a difference between a first distance and a second distance is greater than or equal to a first threshold, the first network device sends the first indication information to the terminal.

The first distance is the distance between the terminal and the first network device, and may be obtained based on the location information of the first network device and the location information of the terminal. The second distance is the distance between the terminal and the second network device, and may be obtained based on the location information of the second network device and the location information of the terminal. The first threshold is a positive number.

In other words, when the first network device is increasingly far away from the terminal, the second network device is increasingly close to the terminal, and a difference between the distance between the terminal and the first network device and the distance between the terminal and the second network device is greater than or equal to the first threshold, the first network device may indicate the terminal to perform downlink synchronization. It may be understood that, when the distance between the terminal and the first network device is the same as the distance between the terminal and the second network device or the difference between the distance between the terminal and the first network device and the distance between the terminal and the second network device is less than the first threshold, a difference between time, estimated by the first network device, when a downlink synchronization signal of the first cell sent by the first network device arrives at the terminal and time, estimated by the first network device, when the downlink synchronization signal of the second cell sent by the second network device arrives at the terminal is less than or equal to a first time difference. Therefore, to avoid performing unnecessary downlink synchronization, the terminal may still use downlink synchronization that is for communication with the first network device, as downlink synchronization that is for communication with the second network device.

In another possible implementation, when an absolute value of a difference between a first propagation delay and a second propagation delay is greater than or equal to a second threshold, the first network device sends the first indication information to the terminal.

The first propagation delay is a propagation delay of information sent by the first network device to the terminal. The first propagation delay is equal to a ratio of the first distance to the speed of light. The second propagation delay is a propagation delay of information sent by the second network device to the terminal. The second propagation delay is equal to a ratio of the second distance to the speed of light. The second threshold is a positive number.

In other words, when the difference between the propagation delay of the information sent by the first network device to the terminal and the propagation delay of the information sent by the second network device to the terminal is greater than or equal to the second threshold, the first network device may indicate the terminal to perform downlink synchronization. It may be understood that, when the propagation delay of the information sent by the first network device to the terminal is the same as the propagation delay of the information sent by the second network device to the terminal or a difference between the propagation delay of the information sent by the first network device to the terminal and the propagation delay of the information sent by the second network device to the terminal is less than the second threshold, a difference between time, estimated by the first network device, when a downlink synchronization signal of the first cell sent by the first network device arrives at the terminal and time, estimated by the first network device, when the downlink synchronization signal of the second cell sent by the second network device arrives at the terminal is less than or equal to the first time difference. Therefore, to avoid performing unnecessary downlink synchronization, the terminal may still use downlink synchronization that is for communication with the first network device, as downlink synchronization that is for communication with the second network device.

It may be understood that, for a case in which the second network device is configured to forward or transparently transmit information between the second access network device and the terminal in the manner 2, the first access network device sends the first indication information to the terminal, and correspondingly, the terminal receives the first indication information from the first access network device.

In a possible implementation, when an absolute value of a difference between a third distance and a fourth distance is greater than or equal to a third threshold, the first access network device sends the first indication information to the terminal.

The third distance is a sum of a distance between the first access network device and the first network device and a distance between the first network device and the terminal, and may be obtained based on location information of the first access network device, the location information of the first network device, and the location information of the terminal. The fourth distance is a sum of a distance between the second access network device and the second network device and a distance between the second network device and the terminal, and may be obtained based on location information of the second access network device, the location information of the second network device, and the location information of the terminal. The third threshold is a positive number. The third threshold may be the same as or different from the first threshold.

In other words, when the first network device is increasingly far away from the terminal, the second network device is increasingly close to the terminal, and a difference between the third distance and the fourth distance is greater than or equal to the third threshold, the first access network device may indicate the terminal to perform downlink synchronization. It may be understood that when the third distance is the same as the fourth distance or a difference between the third distance and the fourth distance is less than the third threshold, a difference between time, estimated by the first access network device, when a downlink synchronization signal of the first cell sent by the first access network device arrives at the terminal and time, estimated by the first access network device, when a downlink synchronization signal of the second cell sent by the second access network device arrives at the terminal is less than or equal to a second time difference. Therefore, to avoid performing unnecessary downlink synchronization, the terminal may still use downlink synchronization that is for communication with the first network device, as downlink synchronization that is for communication with the second network device.

In another possible implementation, when an absolute value of a difference between a third propagation delay and a fourth propagation delay is greater than or equal to a fourth threshold, the first access network device sends the first indication information to the terminal.

The third propagation delay is a propagation delay of information sent by the first access network device to the terminal via the first network device. The third propagation delay is equal to a ratio of the third distance to the speed of light. The fourth propagation delay is a propagation delay of information sent by the second access network device to the terminal via the second network device. The fourth propagation delay is equal to a ratio of the fourth distance to the speed of light. The fourth threshold is a positive number. The fourth threshold is the same as or different from the second threshold.

In other words, when the difference between the propagation delay of the information sent by the first access network device to the terminal via the first network device and the propagation delay of the information sent by the second access network device to the terminal via the second network device is greater than or equal to the fourth threshold, the first access network device may indicate the terminal to perform downlink synchronization. It may be understood that, when the propagation delay of the information sent by the first access network device to the terminal via the first network device is the same as the propagation delay of the information sent by the second access network device to the terminal via the second network device or a difference between the propagation delay of the information sent by the first access network device to the terminal via the first network device and the propagation delay of the information sent by the second access network device to the terminal via the second network device is less than the fourth threshold, a difference between time, estimated by the first access network device, when a downlink synchronization signal of the first cell sent by the first access network device arrives at the terminal and time, estimated by the first access network device, when the downlink synchronization signal of the second cell sent by the second access network device arrives at the terminal is less than or equal to the second time difference. Therefore, to avoid performing unnecessary downlink synchronization, the terminal may still use downlink synchronization that is for communication with the first network device, as downlink synchronization that is for communication with the second network device.

In a possible implementation, the first indication information is carried in a dedicated RRC message, a dedicated media access control-control element (medium access control control element, MAC-CE), or a dedicated physical channel; or the first indication information is carried in a common RRC message, a common MAC-CE, or a common physical channel. It may be understood that the first indication information may alternatively be carried in another message. This is not limited.

Optionally, the dedicated RRC message is an intra-cell handover command. The intra-cell handover command is a handover command based on a time condition. In other words, the first indication information may be carried in an intra-cell handover command based on the time condition. The intra-cell handover command based on the time condition may also be referred to as an intra-cell handover command triggered based on the time condition.

The intra-cell handover command based on the time condition may be understood as that the intra-cell handover command is delivered based on a moment indicated in advance. For example, the first network device indicates the terminal to switch a network device at a moment T. Subsequently, the first network device sends an intra-cell handover command to the terminal at the moment T, and the intra-cell handover command may be referred to as an intra-cell handover command based on a time condition. In this embodiment of this application, the intra-cell handover command may also be referred to as a handover command in a cell.

It may be understood that, in addition to indicating, based on the first indication information, the terminal to perform downlink synchronization or the terminal to stop using the downlink timing of the first cell, the first network device or the first access network device may further indicate, in an implicit indication manner, the terminal to perform downlink synchronization or the terminal to stop using the downlink timing of the first cell.

For example, the first network device or the first access network device sends an intra-cell handover command to the terminal. The intra-cell handover command is an intra-cell handover command based on a time condition, and the intra-cell handover command does not carry a handover condition based on a location or signal quality. In this case, after receiving the intra-cell handover command, the terminal may determine to perform downlink synchronization, or determine to stop using the downlink timing of the first cell. Subsequently, the terminal may perform downlink synchronization.

It may be understood that if the first network device or the first access network device does not send the first indication information to the terminal, or the first network device or the first access network device sends second indication information to the terminal, where the second indication information indicates that the downlink synchronization is not required, or the second indication information indicates that the downlink timing of the first cell can be continued, the terminal does not need to perform downlink synchronization.

For example, when the difference between the first distance and the second distance is less than the first threshold, the first network device or the first access network device does not send the first indication information to the terminal, or the first network device or the first access network device sends the second indication information to the terminal.

Optionally, in a possible implementation of the method shown in FIG. 3, the terminal performs downlink synchronization when determining to switch the connected network device. Specifically, as shown in FIG. 5, the method shown in FIG. 3 may further include S305.

S305: The terminal determines to switch the connected network device.

In a possible implementation, when determining that remaining service time of the first network device is less than or equal to a fifth threshold, the terminal determines to switch the connected network device. For example, when determining that the remaining service time of the first network device is 0, the terminal determines to switch the connected network device.

The remaining service time is remaining time in which the first network device can be connected to the terminal. For example, for a case in which the first network device has some functions of the access network device in the manner 1 or the manner 2, the remaining service time is remaining time in which the first network device can provide a service for the terminal. In the manner 2, when the second network device is configured to forward or transparently transmit the information between the second access network device and the terminal, the remaining service time is remaining time in which the first network device can forward or transparently transmit the information between the terminal and the first access network device.

In a possible implementation, before S305, the terminal may receive indication information of the remaining service time, set a timer based on the remaining service time indicated by the indication information, and when the timer expires, determine to switch the connected network device.

In an example, for a case in which the first network device has some functions of the access network device in the manner 1 or the manner 2, before S305, the first network device sends the indication information of the remaining service time to the terminal by using a dedicated RRC message or a broadcast message. After receiving the indication information of the remaining service time, the terminal starts a first timer, where initial time of the first timer is time indicated by the indication information. Subsequently, when the first timer expires, the terminal determines to switch the connected network device.

In another example, for a case in which the second network device is configured to forward or transparently transmit the information between the second access network device and the terminal in the manner 2, before S305, the first access network device sends a dedicated RRC message or a broadcast message to the terminal via the first network device, where the dedicated RRC message or the broadcast message carries the indication information of the remaining service time. After receiving the dedicated RRC message or the broadcast message, the terminal starts a second timer, where initial time of the second timer is time indicated by the indication information. Subsequently, when the second timer expires, the terminal determines to switch the connected network device. In a possible implementation, before S305, the terminal may receive indication information indicating a moment (for example, indicating an absolute moment) at which the first cell stops serving the terminal, and determine, based on the indication information when the moment arrives, to switch the connected network device.

In a possible implementation, after the terminal determines to switch the connected network device, the terminal may further determine, based on the location information of the first network device, the location information of the second network device, and the location information of the terminal, whether to perform downlink synchronization, or the terminal may further determine, based on the propagation delay between the terminal and the first access network device and the propagation delay between the terminal and the second access network device, whether to perform downlink synchronization.

For example, for a case in which the first network device has some functions of the access network device in the manner 1 or the manner 2, the terminal performs downlink synchronization when the absolute value of the difference between the first distance and the second distance is greater than or equal to the first threshold. For descriptions of the first distance, the second distance, and the first threshold, refer to corresponding descriptions in S304. Details are not described herein again. In other words, the terminal performs downlink synchronization when the first network device is increasingly far away from the terminal, the second network device is increasingly close to the terminal, and a difference between the distance between the terminal and the first network device and the distance between the terminal and the second network device is greater than or equal to the first threshold. It may be understood that, when the distance between the terminal and the first network device is the same as the distance between the terminal and the second network device or the difference between the distance between the terminal and the first network device and the distance between the terminal and the second network device is less than the first threshold, a difference between time, estimated by the terminal, when a downlink synchronization signal of the first cell sent by the first network device arrives at the terminal and time, estimated by the terminal, when the downlink synchronization signal of the second cell sent by the second network device arrives at the terminal is less than or equal to a first time difference. Therefore, to avoid performing unnecessary downlink synchronization, the terminal may still use downlink synchronization that is for communication with the first network device, as downlink synchronization that is for communication with the second network device.

For example, for a case in which the first network device has some functions of the access network device in the manner 1 or the manner 2, the terminal performs downlink synchronization when the absolute value of the difference between the first propagation delay and the second propagation delay is greater than or equal to the second threshold. For descriptions of the first propagation delay, the second propagation delay, and the second threshold, refer to corresponding descriptions in S304. Details are not described herein again. In other words, when the difference between the propagation delay of the information sent by the first network device to the terminal and the propagation delay of the information sent by the second network device to the terminal is greater than or equal to the second threshold, the terminal performs downlink synchronization. It may be understood that, when the propagation delay of the information sent by the first network device to the terminal is the same as the propagation delay of the information sent by the second network device to the terminal or a difference between the propagation delay of the information sent by the first network device to the terminal and the propagation delay of the information sent by the second network device to the terminal is less than the second threshold, a difference between time, estimated by the terminal, when a downlink synchronization signal of the first cell sent by the first network device arrives at the terminal and time, estimated by the terminal, when the downlink synchronization signal of the second cell sent by the second network device arrives at the terminal is less than or equal to the first time difference. Therefore, to avoid performing unnecessary downlink synchronization, the terminal may still use downlink synchronization that is for communication with the first network device, as downlink synchronization that is for communication with the second network device.

For example, for a case in which the second network device is configured to forward or transparently transmit the information between the second access network device and the terminal in the manner 2, the terminal performs downlink synchronization when the absolute value of the difference between the third propagation delay and the fourth propagation delay is greater than or equal to the fourth threshold. The third propagation delay is the sum of the propagation delay between the first access network device and the first network device and the propagation delay between the first network device and the terminal, that is, the propagation delay of the information sent by the first access network device to the terminal via the first network device. The fourth propagation delay is the sum of the propagation delay between the second access network device and the second network device and the propagation delay between the second network device and the terminal, that is, the propagation delay of the information sent by the second access network device to the terminal via the second network device. To be specific, the terminal may determine the propagation delay between the first network device and the terminal based on the location information of the first network device and the location information of the terminal, and add the propagation delay between the first network device and the terminal and the propagation delay between the first network device and the first access network device (the propagation delay may be notified by the first access network device to the terminal), to obtain the third propagation delay. Similarly, the terminal may determine the propagation delay between the second network device and the terminal based on the location information of the second network device and the location information of the terminal, and add the propagation delay between the second network device and the terminal and the propagation delay between the second network device and the second access network device (the propagation delay may be notified by the second access network device to the terminal), to obtain the fourth propagation delay. In other words, when the difference between the propagation delay of the information sent by the first access network device to the terminal via the first network device and the propagation delay of the information sent by the second access network device to the terminal via the second network device is greater than or equal to the fourth threshold, the terminal performs downlink synchronization.

It may be understood that, when the propagation delay of the information sent by the first access network device to the terminal via the first network device is the same as the propagation delay of the information sent by the second access network device to the terminal via the second network device or a difference between the propagation delay of the information sent by the first access network device to the terminal via the first network device and the propagation delay of the information sent by the second access network device to the terminal via the second network device is less than the fourth threshold, a difference between time, estimated by the terminal, when a downlink synchronization signal of the first cell sent by the first access network device arrives at the terminal and time, estimated by the terminal, when the downlink synchronization signal of the second cell sent by the second access network device arrives at the terminal is less than or equal to the second time difference. Therefore, to avoid performing unnecessary downlink synchronization, the terminal may still use downlink synchronization that is for communication with the first network device, as downlink synchronization that is for communication with the second network device.

For example, for a case in which the second network device is configured to forward or transparently transmit the information between the second access network device and the terminal in the manner 2, the terminal performs downlink synchronization when the absolute value of the difference between the third distance and the fourth distance is greater than or equal to the third threshold. The third distance may be equal to a product of the third propagation delay and the speed of light, and the fourth distance may be equal to a product of the fourth propagation delay and the speed of light. In other words, when the first network device is increasingly far away from the terminal, the second network device is increasingly close to the terminal, and a difference between the third distance and the fourth distance is greater than or equal to the third threshold, the terminal performs downlink synchronization. It may be understood that when the third distance is the same as the fourth distance or a difference between the third distance and the fourth distance is less than the third threshold, a difference between time, estimated by the terminal, when a downlink synchronization signal of the first cell sent by the first access network device arrives at the terminal and time, estimated by the terminal, when a downlink synchronization signal of the second cell sent by the second access network device arrives at the terminal is less than or equal to a second time difference. Therefore, to avoid performing unnecessary downlink synchronization, the terminal may still use downlink synchronization that is for communication with the first network device, as downlink synchronization that is for communication with the second network device. It may be understood that actions of the terminal, the first network device, the second network device, the first access network device, or the second access network device in S301 to S305 may be performed by the processor 201 in the communication apparatus 20 shown in FIG. 2 by invoking the application program code stored in the memory 203. This is not limited in this embodiment of this application.

In the methods shown in FIG. 3 to FIG. 5, the terminal is in the connected state. In a specific application, the terminal may alternatively be in a radio resource control idle (radio resource control idle, RRC-idle) state or a radio resource control inactive (radio resource control inactive, RRC-inactive) state. The following describes a handover method when the terminal is in the RRC-idle state or the RRC-inactive state.

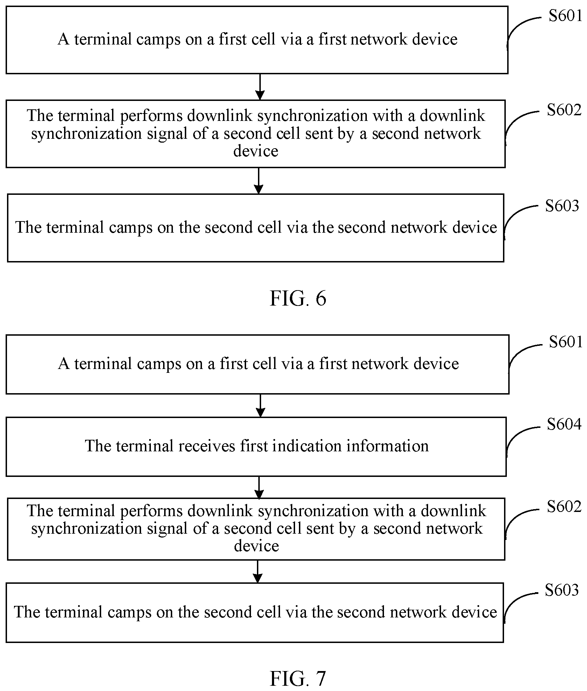

FIG. 6 shows another handover method according to an embodiment of this application. The handover method includes S601 to S603.

S601: A terminal camps on a first cell via a first network device.

It may be understood that the handover method shown in FIG. 6 is similar to the handover method shown in FIG. 3, and may be applied to the communication system 10 shown in FIG. 1A, or applied to the communication system 11 shown in FIG. 1C. For a case in which the method shown in FIG. 6 is applied to the communication system 10 shown in FIG. 1A, refer to the following descriptions of a manner 3. For a case in which the method shown in FIG. 6 is applied to the communication system 11 shown in FIG. 1C, refer to the following descriptions of a manner 4. The following provides detailed descriptions.

### Manner 3:

In the manner 3, the terminal may be a terminal in the communication system 10. For example, the terminal is the terminal 102 shown in FIG. 1A. The first network device may be a network device in the communication system 10. For example, the first network device may be the network device 101 shown in FIG. 1A.

In an example, the first network device is a first satellite. Optionally, the first satellite has a function of a first access network device. In other words, the first satellite may be considered as the first access network device, the first satellite may be used as the first access network device, or the first satellite may be replaced with the first access network device. In this case, a downlink synchronization signal of the first cell sent by the first network device is generated and sent by the first network device. For descriptions of the first access network device, refer to the descriptions of the access network device in FIG. 1A.

It may be understood that, that a terminal camps on a first cell via a first network device may be understood as that the terminal camps on a first cell of the first network device. The first cell is managed by the first network device.

### Manner 4:

In the manner 4, the terminal may be a terminal in the communication system 11. For example, the terminal is the terminal 112 shown in FIG. 1C. The first network device may be a network device in the communication system 11. For example, the first network device may be the network device 111 shown in FIG. 1C.

In an example, the first network device is a first satellite. Optionally, the first satellite or the first network device may be configured to forward or transparently transmit information between a first access network device and the terminal, or the first satellite or the first network device may have some functions of an access network device (for example, a function of a DU node of the access network device, or a function of a DU node of an IAB function). The first access network device may be an access network device in the communication system 11. For example, the first access network device is the access network device 113 shown in FIG. 1C. The first access network device may have a function of a CU node.

It may be understood that, for the manner 4, if the first satellite or the first network device is configured to forward or transparently transmit information between the first access network device and the terminal, a downlink synchronization signal of the first cell sent by the first network device (or the first satellite) is generated by the first access network device and sent to the first network device (or the first satellite). After receiving the downlink synchronization signal, the first network device (or the first satellite) sends the downlink synchronization signal to the terminal. If the first satellite or the first network device has some functions of the access network device, the downlink synchronization signal of the first cell sent by the first network device (or the first satellite) is generated by the first network device and sent to the terminal.

It may be understood that, for the manner 4, that a terminal camps on a first cell via a first network device may be understood as that the terminal camps on a first cell of a first access network device via the first network device. When the first network device is configured to forward or transparently transmit information between the first access network device and the terminal (that is, the first network device transparently transmits a payload), the first cell is managed by the first access network device. When the first network device has some functions of the access network device, the first cell may be managed by the first access network device, or may be managed by the first network device. It may be understood that, in the manner 2, information sent by the terminal may be sent to the first access network device via the first network device. Similarly, information sent by the first access network device may be sent to the terminal via the first network device. It may be understood that, when the first network device has some functions of the access network device, the first network device may alternatively directly send some information to the terminal.

Optionally, for the manner 3 and the manner 4, the terminal is in an RRC-idle state or an RRC-inactive state.

S602: The terminal performs downlink synchronization with a downlink synchronization signal of a second cell sent by a second network device.

A specific process of S602 is similar to the specific process of S302. Therefore, refer to the descriptions in S302. Details are not described herein again.

S603: The terminal camps on the second cell via the second network device.

It may be understood that, if the first cell and the second cell are a same cell, after S602, the terminal may change a network device for camping on the first cell from the first network device to the second network device.

In an example, the communication system 11 shown in FIG. 1C is used as an example. If the first network device is the network device 111, the terminal is the terminal 112, the first access network device and the second access network device are the same and both are the access network device 113, and the second network device is the network device 114, the terminal 112 first camps on the first cell of the access network device 113 via the network device 111, and camps on the first cell of the access network device 113 via the network device 114 after performing downlink synchronization with the downlink synchronization signal of the second cell sent by the network device 114.

It may be understood that, if the first cell and the second cell are not a same cell, but the configuration of the first cell is the same as the configuration of the second cell, or the first cell and the second cell are different cells, after S602, the terminal does not camp on the first cell, but camps on the second cell via the second network device.

In an example, the communication system 10 shown in FIG. 1A is used as an example. If the first network device is the network device 101, the terminal is the terminal 102, and the second network device is the network device 103, the terminal 102 first camps on the first cell of the network device 101, and camps on the second cell of the network device 102 after performing downlink synchronization with the downlink synchronization signal of the second cell sent by the network device 102. The first cell is different from the second cell, or the first cell and the second cell are not a same cell, but the configuration of the first cell is the same as the configuration of the second cell.

In another example, the communication system 11 shown in FIG. 1C is used as an example. If the first network device is the network device 111, the terminal is the terminal 112, the first access network device and the second access network device are the same and both are the access network device 113, and the second network device is the network device 114, the terminal 112 first camps on the first cell of the access network device 113 via the network device 111, and camps on a second cell of the access network device 113 via the network device 114 after performing downlink synchronization with the downlink synchronization signal of the second cell sent by the network device 114. The first cell and the second cell are not a same cell, but the configuration of the first cell is the same as the configuration of the second cell.

In another example, the communication system 11 shown in FIG. 1C is used as an example. If the first network device is the network device 111, the terminal is the terminal 112, the first access network device is the access network device 113, the second network device is the network device 114, and the second access network device is the access network device 115, the terminal 112 first camps on the first cell of the access network device 113 via the network device 111, and camps on a second cell of the access network device 115 via the network device 114 after performing downlink synchronization with the downlink synchronization signal of the second cell sent by the network device 114. The first cell is different from the second cell, or the first cell and the second cell are not a same cell, but the configuration of the first cell is the same as the configuration of the second cell.

Based on the method shown in FIG. 6, the terminal may camp on the first cell via the first network device. After performing downlink synchronization with the downlink synchronization signal of the second cell sent by the second network device, the terminal may camp on the second cell via the second network device. The second cell and the first cell have a same cell identifier. In this way, when the first network device is switched to the second network device, but a cell identifier of a cell on which the terminal camps does not change, the terminal may perform downlink synchronization with the downlink synchronization signal of the second cell sent by the second network device, so that subsequent communication can be normally performed. For example, for the manner 3, after S602, the terminal may communicate with the second network device. For the manner 4, after S602, the terminal may communicate with the second access network device via the second network device.

Optionally, in a possible implementation of the method shown in FIG. 6, the first indication information may be for triggering the terminal to perform downlink synchronization. Specifically, as shown in FIG. 7, the method shown in FIG. 6 may further include S604.

S604: The terminal receives the first indication information.

A specific process of S604 is similar to the specific process of S304. Therefore, refer to the corresponding descriptions in S304. A difference is that in S604, the first indication information cannot be carried in a dedicated RRC message, a dedicated MAC-CE, or a dedicated physical channel. In S604, the first indication information may be carried in a common RRC message, a common MAC-CE, or a common physical channel.

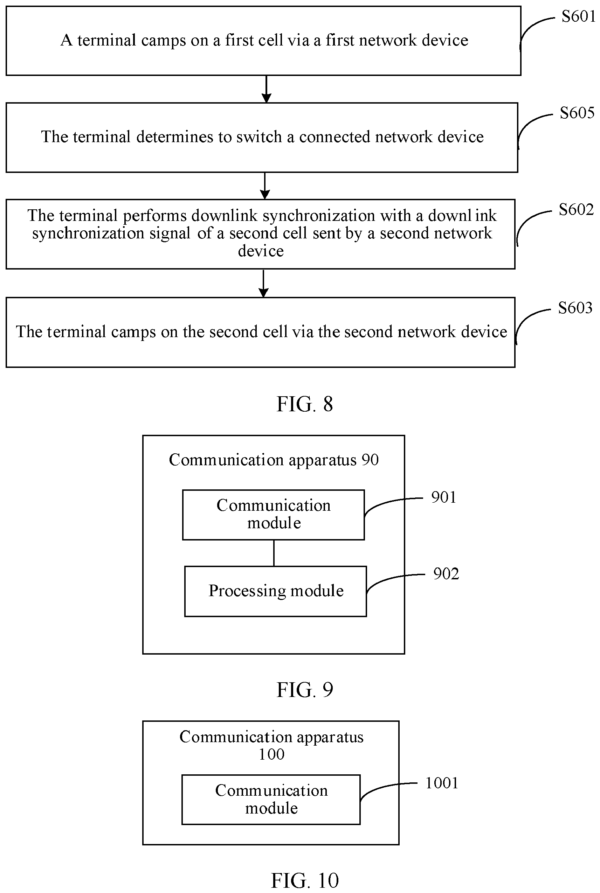

Optionally, in a possible implementation of the method shown in FIG. 6, the terminal performs downlink synchronization when determining to switch a connected network device. Specifically, as shown in FIG. 8, the method shown in FIG. 6 may further include S605.

S605: The terminal determines to switch the connected network device.

A specific process of S605 is similar to the specific process of S305. Therefore, refer to the corresponding descriptions in S305. Adifference is that the indication information of the remaining service time cannot be carried in a dedicated RRC message, but is carried in a broadcast message. It may be understood that actions of the terminal, the first network device, the second network device, the first access network device, or the second access network device in S601 to S605 may be performed by the processor 201 in the communication apparatus 20 shown in FIG. 2 by invoking the application program code stored in the memory 203. This is not limited in this embodiment of this application.

It may be understood that in the foregoing embodiments, a method and/or a step implemented by the terminal may be implemented by a component (for example, a chip or a circuit) that can be used in the terminal, and a method and/or a step implemented by the first access network device may be implemented by a component (for example, a chip or a circuit) that can be used in the first access network device. This is not limited.

The foregoing mainly describes the solutions provided in embodiments of this application from a perspective of interaction between network elements. Correspondingly, an embodiment of this application further provides a communication apparatus. The communication apparatus may be the terminal in the foregoing method embodiments, an apparatus including the foregoing terminal, or a component that can be used in the terminal. Alternatively, the communication apparatus may be the first access network device in the foregoing method embodiments, an apparatus including the foregoing first access network device, or a component that can be used in the first access network device. It may be understood that, to implement the foregoing functions, the terminal, the first access network device, or the like includes a corresponding hardware structure and/or software module for implementing each function. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal or the first access network device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

For example, when each functional module is obtained through division in an integrated manner,

FIG. 9 is a schematic of a structure of a communication apparatus 90. The communication apparatus 90 includes a communication module 901 and a processing module 902. The communication module 901 may also be referred to as a transceiver unit or a transceiver module, and may be configured to implement a transceiver function, for example, may be a transceiver circuit, a transceiver machine, a transceiver, or a communication interface.

For example, the communication apparatus 90 is configured to implement a function of a terminal. For example, the communication apparatus 90 is the terminal in the embodiment shown in FIG. 3, the embodiment shown in FIG. 4, the embodiment shown in FIG. 5, the embodiment shown in FIG. 6, the embodiment shown in FIG. 7, or the embodiment shown in FIG. 8.

The communication module 901 is configured to connect to a first cell via a first network device. The processing module 902 is configured to perform downlink synchronization with a downlink synchronization signal of a second cell sent by a second network device.

The communication module 901 is further configured to connect to the second cell via the second network device. The first cell and the second cell have a same cell identifier.

In a possible implementation, the communication module 901 is further configured to receive first indication information.

The first indication information indicates the communication apparatus 90 to perform downlink synchronization, or the first indication information indicates the communication apparatus 90 to stop using downlink timing of the first cell.

In a possible implementation, the first indication information is carried in an intra-cell handover command based on a time condition.

In a possible implementation, the communication module 901 is further configured to receive configuration information.

The configuration information indicates a configuration of the downlink synchronization signal. In a possible implementation, the configuration information includes at least one of the following: a length of the measurement window of the downlink synchronization signal, periodicity information of the measurement window of the downlink synchronization signal, or a first offset, and at least one of the periodicity information or the first offset is for determining a starting location of the measurement window.

In a possible implementation, the processing module 902 is further configured to determine to switch a connected network device. The processing module 902 is specifically configured to: when an absolute value of a difference between a first distance and a second distance is greater than or equal to a first threshold, perform downlink synchronization with the downlink synchronization signal.

The first distance is a distance between the communication apparatus 90 and the first network device, and the second distance is a distance between the communication apparatus 90 and the second network device.

In a possible implementation, the processing module 902 is specifically configured to: when it is determined that remaining service time of the first network device is 0, determine to switch the connected network device.

In a possible implementation, the processing module 902 is specifically configured to search for the downlink synchronization signal. The processing module 902 is further specifically configured to obtain downlink timing based on the downlink synchronization signal.

In a possible implementation, the processing module 902 is specifically configured to obtain a time domain location of the downlink synchronization signal based on location information of the first network device, location information of the second network device, and location information of the communication apparatus 90.

In a possible implementation, the first network device is a first satellite.

In a possible implementation, the first satellite has a function of a first access network device, or the first satellite has a function of a distributed unit of the first access network device.
the first access network device is configured to provide a service for the communication apparatus 90 before the communication apparatus 90 performs downlink synchronization.

In a possible implementation, the second network device is a second satellite.

In a possible implementation, the second satellite has a function of the second access network device, or the second satellite has a function of a distributed unit of the second access network device.

The second access network device is configured to provide a service for the communication apparatus 90 after the communication apparatus 90 performs downlink synchronization.

When the communication apparatus 90 is configured to implement a function of the terminal, for other functions that can be implemented by the communication apparatus 90, refer to related descriptions of the embodiment shown in FIG. 3, the embodiment shown in FIG. 4, the embodiment shown in FIG. 5, the embodiment shown in FIG. 6, the embodiment shown in FIG. 7, or the embodiment shown in FIG. 8. Details are not described again.

In a simple embodiment, a person skilled in the art can figure out that the communication apparatus 90 may use the form shown in FIG. 2. For example, the processor 201 in FIG. 2 may invoke the computer-executable instructions stored in the memory 203, to enable the communication apparatus 90 to perform the method in the foregoing method embodiments.

For example, functions/implementation processes of the communication module 901 and the processing module 902 in FIG. 9 may be implemented by the processor 201 in FIG. 2 by invoking the computer-executable instructions stored in the memory 203. Alternatively, functions/implementation processes of the processing module 902 in FIG. 9 may be implemented by the processor 201 in FIG. 2 by invoking the computer-executable instructions stored in the memory 203, and functions/implementation processes of the communication module 901 in FIG. 9 may be implemented by the communication interface 204 in FIG. 2.

For example, when each functional module is obtained through division in an integrated manner, FIG. 10 is a schematic of a structure of a communication apparatus 100. The communication apparatus 100 includes a communication module 1001. The communication module 1001 may also be referred to as a transceiver unit or a transceiver module, and may be configured to implement a transceiver function, for example, may be a transceiver circuit, a transceiver machine, a transceiver, or a communication interface.

For example, the communication apparatus 100 is configured to implement a function of the first access network device. For example, the communication apparatus 100 is the first access network device in the embodiment shown in FIG. 3, the embodiment shown in FIG. 4, the embodiment shown in FIG. 5, the embodiment shown in FIG. 6, the embodiment shown in FIG. 7, or the embodiment shown in FIG. 8.

The communication module 1001 is configured to connect to a terminal via a first cell. The first cell is a cell to which the terminal is connected via a first network device.

The communication module 1001 is further configured to send first indication information to the terminal. The first indication information indicates the terminal to perform downlink synchronization, or the first indication information indicates the terminal to stop using downlink timing of the first cell.

The communication module 1001 is further configured to connect to the terminal via a second cell. The second cell and the first cell have a same cell identifier, the second cell is a cell connected to the terminal via a second network device, and the first cell and the second cell are managed by the communication apparatus 100.

In a possible implementation, the first indication information is carried in an intra-cell handover command based on a time condition.

In a possible implementation, the communication module 1001 is specifically configured to: when an absolute value of a difference between a first distance and a second distance is greater than or equal to a first threshold, send the first indication information to the terminal.

The first distance is a distance between the terminal and the first network device, and the second distance is a distance between the terminal and the second network device.

In a possible implementation, the communication module 1001 is further configured to send configuration information to the terminal, where the configuration information indicates a configuration of a downlink synchronization signal of the second cell.

In a possible implementation, the configuration information includes at least one of the following: a length of the measurement window of the downlink synchronization signal, periodicity information of the measurement window of the downlink synchronization signal, or a first offset, and at least one of the periodicity information or the first offset is for determining a starting location of the measurement window.

In a possible implementation, the first network device is a first satellite.

In a possible implementation, the first satellite has a function of the communication apparatus 100, or the first satellite has a function of a distributed unit of the communication apparatus 100.

The communication apparatus 100 is configured to provide a service for the terminal.

In a possible implementation, the second network device is a second satellite.

In a possible implementation, the second satellite has a function of the communication apparatus 100, or the second satellite has a function of a distributed unit of the communication apparatus 100. When the communication apparatus 100 is configured to implement a function of the first access network device, for other functions that can be implemented by the communication apparatus 100, refer to related descriptions of the embodiment shown in FIG. 3, the embodiment shown in FIG. 4, the embodiment shown in FIG. 5, the embodiment shown in FIG. 6, the embodiment shown in FIG. 7, or the embodiment shown in FIG. 8. Details are not described again.

In a simple embodiment, a person skilled in the art can figure out that the communication apparatus 100 may use the form shown in FIG. 2. For example, the processor 201 in FIG. 2 may invoke the computer-executable instructions stored in the memory 203, to enable the communication apparatus 100 to perform the method in the foregoing method embodiments.

For example, a function/implementation process of the communication module 1001 in FIG. 10 may be implemented by the processor 201 in FIG. 2 by invoking the computer-executable instructions stored in the memory 203. Alternatively, a function/implementation process of the communication module 1001 in FIG. 10 may be implemented by the communication interface 204 in FIG. 2.

It should be noted that one or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system on chip) or an ASIC, or may be an independent semiconductor chip. In addition to the core configured to perform calculation or processing by executing a software instruction, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including: at least one processor and an interface, where the at least one processor is coupled to a memory through an interface; and when the at least one processor executes a computer program or instructions in the memory, the method in any one of the foregoing method embodiments is performed. In a possible implementation, the chip system further includes the memory. Optionally, the chip system may include a chip, or may include a chip and another discrete component. This is not specifically limited in this embodiment of this application.

Optionally, an embodiment of this application further provides a computer-readable storage medium. All or some of the procedures in the foregoing method embodiments may be implemented by a computer program instructing related hardware. The program may be stored in the computer-readable storage medium. When the program is executed, the procedures of the foregoing method embodiments may be included. The computer-readable storage medium may be an internal storage unit of the communication apparatus in any one of the foregoing embodiments, for example, a hard disk or memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is configured on the communication apparatus. Further, the computer-readable storage medium may include both an internal storage unit and an external storage device of the communication apparatus. The computer-readable storage medium is configured to store the computer program and store other programs and data that are required by the communication apparatus. The computer-readable storage medium may be further configured to temporarily store data that has been output or is to be output.

Optionally, an embodiment of this application further provides a computer program product. All or some of the procedures in the foregoing method embodiments may be implemented by a computer program instructing related hardware. The program may be stored in the computer program product. When the program is executed, the procedures of the foregoing method embodiments may be included.

Optionally, an embodiment of this application further provides computer instructions. All or some of the procedures in the foregoing method embodiments may be implemented by computer instructions instructing related hardware (such as a computer, a processor, an access network device, a mobility management network element, or a session management network element). The program may be stored in the computer-readable storage medium or the computer program product. The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

## Claims

1. A handover method, applied to handover of a terminal from a first network device to a second network device, wherein the method comprises:
connecting to a first cell via the first network device;
performing downlink synchronization with a downlink synchronization signal of a second cell sent by the second network device; and
connecting to the second cell via the second network device, wherein the first cell and the second cell have a same cell identifier.

2. The method according to claim 1, wherein the method further comprises:
receiving first indication information, wherein the first indication information indicates the terminal to perform downlink synchronization, or the first indication information indicates the terminal to stop using downlink timing of the first cell.

3. The method according to claim 2, wherein the first indication information is carried in an intra-cell handover command based on a time condition.

4. The method according to claim 2 or 3, wherein the method further comprises:
receiving configuration information, wherein the configuration information indicates a configuration of the downlink synchronization signal.

5. The method according to claim 4, wherein the configuration information comprises at least one of the following: a length of a measurement window of the downlink synchronization signal, periodicity information of the measurement window of the downlink synchronization signal, or a first offset, and at least one of the periodicity information or the first offset is for determining a starting location of the measurement window.

6. The method according to claim 1, wherein the method further comprises:
determining to switch a connected network device.

7. The method according to claim 6, wherein the determining to switch a connected network device comprises:
when it is determined that remaining service time of the first network device is 0, determining to switch the connected network device.

8. The method according to any one of claims 1 to 7, wherein the performing downlink synchronization with a downlink synchronization signal of a second cell sent by the second network device comprises:
searching for the downlink synchronization signal; and
obtaining downlink timing based on the downlink synchronization signal.

9. The method according to any one of claims 1 to 7, wherein the performing downlink synchronization with a downlink synchronization signal of a second cell sent by the second network device comprises:
obtaining a time domain location of the downlink synchronization signal based on location information of the first network device, location information of the second network device, and location information of the terminal.

10. The method according to any one of claims 1 to 7, wherein the performing downlink synchronization with a downlink synchronization signal of a second cell sent by the second network device comprises:
when an absolute value of a difference between a first distance and a second distance is greater than or equal to a first threshold, performing downlink synchronization with the downlink synchronization signal, wherein the first distance is a distance between the terminal and the first network device, and the second distance is a distance between the terminal and the second network device.

11. The method according to any one of claims 1 to 10, wherein
the first network device is a first satellite.

12. The method according to claim 11, wherein
the first satellite has a function of a first access network device, or the first satellite has a function of a distributed unit of the first access network device, wherein
the first access network device is configured to provide a service for the terminal before the terminal performs downlink synchronization.

13. The method according to any one of claims 1 to 12, wherein
the second network device is a second satellite.

14. The method according to claim 13, wherein
the second satellite has a function of a second access network device, or the second satellite has a function of a distributed unit of the second access network device, wherein
the second access network device is configured to provide a service for the terminal after the terminal performs downlink synchronization.

15. A handover method, applied to a first access network device, wherein the method comprises:
connecting to a terminal via a first cell, wherein the first cell is a cell connected to the terminal via a first network device;
sending first indication information to the terminal, wherein the first indication information indicates the terminal to perform downlink synchronization, or the first indication information indicates the terminal to stop using downlink timing of the first cell; and
connecting to the terminal via a second cell, wherein the second cell and the first cell have a same cell identifier, the second cell is a cell connected to the terminal via a second network device, and the first cell and the second cell are managed by the first access network device.

16. The method according to claim 15, wherein the first indication information is carried in an intra-cell handover command based on a time condition.

17. The method according to claim 15 or 16, wherein the sending first indication information to the terminal comprises:
when an absolute value of a difference between a first distance and a second distance is greater than or equal to a first threshold, sending the first indication information to the terminal, wherein the first distance is a distance between the terminal and the first network device, and the second distance is a distance between the terminal and the second network device.

18. The method according to any one of claims 15 to 17, wherein the method further comprises:
sending configuration information to the terminal, wherein the configuration information indicates a configuration of a downlink synchronization signal of the second cell.

19. The method according to claim 18, wherein the configuration information comprises at least one of the following: a length of a measurement window of the downlink synchronization signal, periodicity information of the measurement window of the downlink synchronization signal, or a first offset, and at least one of the periodicity information or the first offset is for determining a starting location of the measurement window.

20. The method according to any one of claims 15 to 19, wherein
the first network device is a first satellite.

21. The method according to claim 20, wherein
the first satellite has a function of the first access network device, or the first satellite has a function of a distributed unit of the first access network device, wherein
the first access network device is configured to provide a service for the terminal.

22. The method according to any one of claims 15 to 20, wherein
the second network device is a second satellite.

23. The method according to claim 22, wherein
the second satellite has a function of the first access network device, or the second satellite has a function of a distributed unit of the first access network device.

24. A communication apparatus, wherein the communication apparatus is handed over from a first network device to a second network device, and the communication apparatus comprises a communication module and a processing module, wherein
the communication module is configured to connect to a first cell via the first network device;
the processing module is configured to perform downlink synchronization with a downlink synchronization signal of a second cell sent by the second network device; and
the communication module is further configured to connect to the second cell via the second network device, wherein the first cell and the second cell have a same cell identifier.

25. The communication apparatus according to claim 24, wherein
the communication module is further configured to receive first indication information, wherein the first indication information indicates the communication apparatus to perform downlink synchronization, or the first indication information indicates the communication apparatus to stop using downlink timing of the first cell.

26. The communication apparatus according to claim 25, wherein the first indication information is carried in an intra-cell handover command based on a time condition.

27. The communication apparatus according to claim 25 or 26, wherein
the communication module is further configured to receive configuration information, wherein the configuration information indicates a configuration of the downlink synchronization signal.

28. The communication apparatus according to claim 27, wherein the configuration information comprises at least one of the following: a length of a measurement window of the downlink synchronization signal, periodicity information of the measurement window of the downlink synchronization signal, or a first offset, and at least one of the periodicity information or the first offset is for determining a starting location of the measurement window.

29. The communication apparatus according to claim 24, wherein
the processing module is further configured to determine to switch a connected network device.

30. The communication apparatus according to claim 29, wherein
the processing module is specifically configured to: when it is determined that remaining service time of the first network device is 0, determine to switch the connected network device.

31. The communication apparatus according to any one of claims 24 to 30, wherein
the processing module is specifically configured to search for the downlink synchronization signal; and
the processing module is further specifically configured to obtain downlink timing based on the downlink synchronization signal.

32. The communication apparatus according to any one of claims 24 to 30, wherein
the processing module is specifically configured to obtain a time domain location of the downlink synchronization signal based on location information of the first network device, location information of the second network device, and location information of the communication apparatus.

33. The communication apparatus according to any one of claims 24 to 30, wherein
the processing module is specifically configured to: when an absolute value of a difference between a first distance and a second distance is greater than or equal to a first threshold, perform downlink synchronization with the downlink synchronization signal, wherein the first distance is a distance between the communication apparatus and the first network device, and the second distance is a distance between the communication apparatus and the second network device.

34. The communication apparatus according to any one of claims 24 to 33, wherein
the first network device is a first satellite.

35. The communication apparatus according to claim 34, wherein
the first satellite has a function of a first access network device, or the first satellite has a function of a distributed unit of the first access network device, wherein
the first access network device is configured to provide a service for the communication apparatus before the communication apparatus performs downlink synchronization.

36. The communication apparatus according to any one of claims 24 to 35, wherein
the second network device is a second satellite.

37. The communication apparatus according to claim 36, wherein
the second satellite has a function of a second access network device, or the second satellite has a function of a distributed unit of the second access network device, wherein
the second access network device is configured to provide a service for the communication apparatus after the communication apparatus performs downlink synchronization.

38. A communication apparatus, wherein the communication apparatus comprises a communication module, wherein
the communication module is configured to connect to a terminal via a first cell, wherein the first cell is a cell connected to the terminal via a first network device;
the communication module is further configured to send first indication information to the terminal, wherein the first indication information indicates the terminal to perform downlink synchronization, or the first indication information indicates the terminal to stop using downlink timing of the first cell; and
the communication module is further configured to connect to the terminal via a second cell, wherein the second cell and the first cell have a same cell identifier, the second cell is a cell connected to the terminal via a second network device, and the first cell and the second cell are managed by the communication apparatus.

39. The communication apparatus according to claim 38, wherein the first indication information is carried in an intra-cell handover command based on a time condition.

40. The communication apparatus according to claim 38 or 39, wherein
the communication module is specifically configured to: when an absolute value of a difference between a first distance and a second distance is greater than or equal to a first threshold, send the first indication information to the terminal, wherein the first distance is a distance between the terminal and the first network device, and the second distance is a distance between the terminal and the second network device.

41. The communication apparatus according to any one of claims 38 to 40, wherein
the communication module is further configured to send configuration information to the terminal, wherein the configuration information indicates a configuration of a downlink synchronization signal of the second cell.

42. The communication apparatus according to claim 41, wherein the configuration information comprises at least one of the following: a length of a measurement window of the downlink synchronization signal, periodicity information of the measurement window of the downlink synchronization signal, or a first offset, and at least one of the periodicity information or the first offset is for determining a starting location of the measurement window.

43. The communication apparatus according to any one of claims 38 to 42, wherein
the first network device is a first satellite.

44. The communication apparatus according to claim 43, wherein
the first satellite has a function of the communication apparatus, or the first satellite has a function of a distributed unit of the communication apparatus, wherein
the communication apparatus is configured to provide a service for the terminal.

45. The communication apparatus according to any one of claims 38 to 43, wherein
the second network device is a second satellite.

46. The communication apparatus according to claim 45, wherein
the second satellite has a function of the communication apparatus, or the second satellite has a function of a distributed unit of the communication apparatus.

47. A communication apparatus, comprising a processor, wherein the processor is coupled to a memory, and the memory is configured to store a program or instructions; and when the program or the instructions are executed by the processor, the apparatus is enabled to perform the method according to any one of claims 1 to 14 or the method according to any one of claims 15 to 23.

48. A computer-readable storage medium, wherein the computer-readable storage medium stores a computer program or instructions; and when the computer program or the instructions are executed, a computer is enabled to perform the method according to any one of claims 1 to 14 or the method according to any one of claims 15 to 23.

49. A communication system, comprising the apparatus according to any one of claims 24 to 37 and/or the apparatus according to any one of claims 38 to 46.
